# EUROPEAN PATENT APPLICATION

(11) **EP 4 641 901 A1**
(43) Date of publication of application: **29.10.2025**
(21) Application number: 25172954.7
(22) Date of filing: 28.04.2025
(51) Int. Cl.: H02M 1/32, H02M 1/36, H02M 7/12, H02M 7/487

(54) **VOLTAGE DOUBLER PRECHARGING CIRCUIT FOR GRID CONVERTERS WITH SPLIT DC LINK**

(30) Priority: 28.04.2024 CN 202410524127
(71) Applicant: Huawei Digital Power Technologies Co., Ltd., Shenzhen, Guangdong 518043 (CN)
(72) Inventor: YANG, Yueru, Shenzhen, Guangdong 518043 (CN); TANG, Junsong, Shenzhen, Guangdong 518043 (CN); QIAN, Bin, Shenzhen, Guangdong 518043 (CN); LU, Fenglong, Shenzhen, Guangdong 518043 (CN); WANG, Chen, Shenzhen, Guangdong 518043 (CN)
(74) Representative: Maiwald GmbH

(57) **Abstract**

This application provides a power conversion apparatus with a grid-connected switch turn-on function at a small voltage difference. The power conversion apparatus includes a direct current end, a positive direct current bus, a negative direct current bus, a positive bus capacitor, a negative bus capacitor, a power conversion circuit, a precharge circuit, a grid-connected switch, a controller, a first alternating current end, and a second alternating current end. One end of the positive bus capacitor is connected to the positive direct current bus, and the other end of the positive bus capacitor is connected to the negative direct current bus through the negative bus capacitor. The controller is configured to: when a bus voltage between the positive direct current bus and the negative direct current bus is less than twice a voltage amplitude of a power grid, electrically connect a bus midpoint to the second alternating current end; and control, based on a value relationship between a voltage amplitude of the first alternating current end and a voltage amplitude of the second alternating current end, the precharge circuit to electrically connect the positive direct current bus or the negative direct current bus to the first alternating current end. In this way, the grid-connected switch can meet a turn-on condition at a small voltage difference, to avoid a sticking risk.

## Description

### TECHNICAL FIELD

This application relates to the field of power supply technologies, and in particular, to a power conversion apparatus with a grid-connected switch turn-on function at a small voltage difference.

### BACKGROUND

When a voltage difference between two ends of a grid-connected switch on an alternating current side of a power conversion system (PCS) is large, there is a sticking risk during turn-on. Therefore, when the PCS is connected to a grid, the PCS needs to generate a waveform during inversion to establish a voltage on a filter capacitor on the alternating current side. In addition, the grid-connected switch on the alternating current side can be turned on only when the voltage difference between the two ends of the grid-connected switch on the alternating current side is less than a specific limit, to implement a connection to the grid.

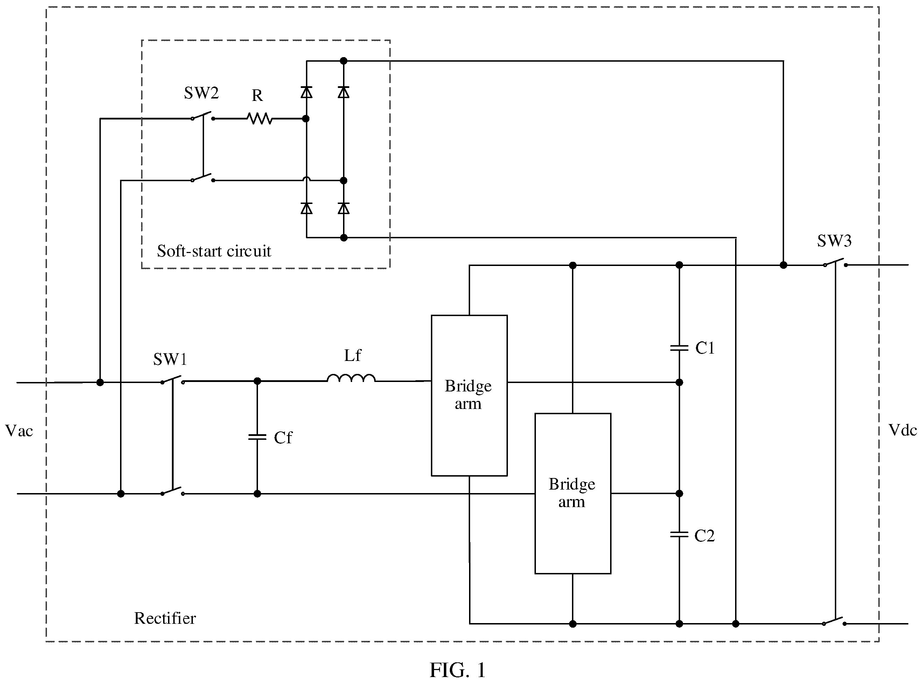

In an undercharge scenario of a battery of the PCS, before generating the waveform during inversion, the PCS needs to obtain power from the alternating current side to establish a direct current bus voltage. Currently, a soft-start circuit shown in FIG. 1 is mainly used to obtain power from the alternating current side, to charge bus capacitors C1 and C2 at the same time. However, a highest charging voltage that the soft-start circuit can implement for the direct current bus voltage is a voltage amplitude on the alternating current side. The charging voltage drops when the PCS generates the waveform during inversion. Consequently, the grid-connected switch on the alternating current side does not meet a turn-on condition at a small voltage difference, which causes the sticking risk in the grid-connected switch on the alternating current side.

### SUMMARY

This application provides a power conversion apparatus with a grid-connected switch turn-on function at a small voltage difference, so that a grid-connected switch in the power conversion apparatus can meet a turn-on condition at a small voltage difference, to avoid a sticking risk.

According to a first aspect, this application provides a power conversion apparatus with a grid-connected switch turn-on function at a small voltage difference. The power conversion apparatus includes a direct current end, a positive direct current bus, a negative direct current bus, a positive bus capacitor, a negative bus capacitor, a power conversion circuit, a precharge circuit, a grid-connected switch, a controller, a first alternating current end, and a second alternating current end. The positive direct current bus and the negative direct current bus are connected to the direct current end. One end of the positive bus capacitor is connected to the positive direct current bus, and the other end of the positive bus capacitor is connected to the negative direct current bus through the negative bus capacitor. A joint between the positive bus capacitor and the negative bus capacitor is a bus midpoint. A direct current end of the power conversion circuit is separately connected to the positive direct current bus and the negative direct current bus. An alternating current end of the power conversion circuit is connected to the first alternating current end and the second alternating current end of the power conversion apparatus through the grid-connected switch. The first alternating current end and the second alternating current end are configured to connect to a power grid. The precharge circuit is separately connected to the positive direct current bus, the negative direct current bus, and the first alternating current end of the power conversion apparatus. The controller is configured to: when a bus voltage between the positive direct current bus and the negative direct current bus is less than twice a voltage amplitude of the power grid, electrically connect the bus midpoint to the second alternating current end of the power conversion apparatus; when a voltage amplitude of the first alternating current end of the power conversion apparatus is greater than a voltage amplitude of the second alternating current end of the power conversion apparatus, control the precharge circuit to electrically connect the positive direct current bus to the first alternating current end of the power conversion apparatus, so that the power grid charges the positive bus capacitor; and when the voltage amplitude of the first alternating current end of the power conversion apparatus is less than the voltage amplitude of the second alternating current end of the power conversion apparatus, control the precharge circuit to electrically connect the negative direct current bus to the first alternating current end of the power conversion apparatus, so that the power grid charges the negative bus capacitor.

In this implementation, the power conversion apparatus electrically connects the bus midpoint to the second alternating current end of the power conversion apparatus when the bus voltage is less than twice the voltage amplitude of the power grid, and controls the precharge circuit to electrically connect the positive direct current bus or the negative direct current bus to the first alternating current end of the power conversion apparatus, so that the power grid charges the positive bus capacitor or the negative bus capacitor. In this way, the bus voltage can be raised to a voltage at least higher than the voltage amplitude of the power grid, and can be raised to a voltage twice the voltage amplitude of the power grid at most, so that the grid-connected switch in the power conversion apparatus meets a turn-on condition at a small voltage difference, to avoid a sticking risk.

With reference to the first aspect, in a first possible implementation, the precharge circuit includes a precharge bridge arm, a precharge resistor, and a first precharge switch. The precharge bridge arm includes an upper bridge arm switch and a lower bridge arm switch. The upper bridge arm switch and the lower bridge arm switch are connected in series between the positive direct current bus and the negative direct current bus. The precharge resistor and the first precharge switch are connected in series between a midpoint of the precharge bridge arm and the first alternating current end of the power conversion apparatus. The controller is configured to: when the bus voltage is less than twice the voltage amplitude of the power grid, control the first precharge switch to be turned on until the bus voltage is greater than twice the voltage amplitude of the power grid. The upper bridge arm switch is in an on state when the bus voltage is less than twice the voltage amplitude of the power grid, and when the voltage amplitude of the first alternating current end of the power conversion apparatus is greater than the voltage amplitude of the second alternating current end of the power conversion apparatus. The lower bridge arm switch is in an on state when the bus voltage is less than twice the voltage amplitude of the power grid, and when the voltage amplitude of the first alternating current end of the power conversion apparatus is less than the voltage amplitude of the second alternating current end of the power conversion apparatus.

In this implementation, the power conversion apparatus may control the precharge bridge arm to be connected and the first precharge switch to be turned on, so that the precharge circuit electrically connects the positive direct current bus or the negative direct current bus to the first alternating current end of the power conversion apparatus. The control manner is simple and easy to implement.

With reference to the first aspect or the first possible implementation of the first aspect, in a second possible implementation, the alternating current end of the power conversion circuit includes a first alternating current end, and the grid-connected switch includes a plurality of first grid-connected switches. The first alternating current end of the power conversion circuit is connected to the first alternating current end of the power conversion apparatus through the plurality of first grid-connected switches that are connected in series. The precharge circuit is connected to the first alternating current end of the power conversion apparatus through at least one of the plurality of first grid-connected switches. The controller is further configured to: when the bus voltage is less than twice the voltage amplitude of the power grid, control the at least one first grid-connected switch to be all turned on.

In this implementation, when the first alternating current end of the power conversion apparatus is electrically connected to the positive direct current bus or the negative direct current bus, at least one existing first grid-connected switch in the power conversion apparatus is used. Usually, an electrical gap between relay contacts of the grid-connected switch is large. Therefore, when a safety requirement of a same electrical gap needs to be met, a switch with a smaller electrical gap may be selected as the first precharge switch in this implementation. This helps reduce a volume of the first precharge switch, and further helps reduce a volume of the power conversion apparatus.

With reference to any one of the first aspect to the second possible implementation of the first aspect, in a third possible implementation, the alternating current end of the power conversion circuit includes a second alternating current end, and the grid-connected switch includes a second grid-connected switch. The second grid-connected switch is connected between the second alternating current end of the power conversion circuit and the second alternating current end of the power conversion apparatus. The controller is configured to: when the bus voltage is less than twice the voltage amplitude of the power grid, control the second grid-connected switch to be turned on, and control the power conversion circuit to electrically connect the bus midpoint to the second alternating current end of the power conversion circuit.

In this implementation, when the power conversion circuit is of a three-level topology, the power conversion apparatus can control the power conversion circuit to electrically connect the bus midpoint to the second alternating current end of the power conversion circuit, and control the second grid-connected switch to be turned on, so that the bus midpoint can be electrically connected to the second alternating current end of the power conversion apparatus. The control manner can be implemented by using the existing second grid-connected switch and the existing power conversion circuit in the power conversion apparatus, and no external circuit needs to be added, thereby helping reduce circuit costs.

With reference to any one of the first aspect to the second possible implementation of the first aspect, in a fourth possible implementation, the alternating current end of the power conversion circuit includes a second alternating current end, the grid-connected switch includes a second grid-connected switch, and the power conversion apparatus further includes a second precharge switch. The second grid-connected switch is connected between the second alternating current end of the power conversion circuit and the second alternating current end of the power conversion apparatus, and the second precharge switch is connected between the bus midpoint and the second alternating current end of the power conversion circuit. The controller is configured to: when the bus voltage is less than twice the voltage amplitude of the power grid, control the second grid-connected switch and the second precharge switch to be both turned on.

In this implementation, when the power conversion circuit is of a two-level topology, the power conversion apparatus can control the second grid-connected switch and the second precharge switch to be both turned on, so that the bus midpoint can be electrically connected to the second alternating current end of the power conversion apparatus. The control manner is simple and easy to implement, and has strong applicability.

With reference to any one of the first aspect to the second possible implementation of the first aspect, in a fifth possible implementation, the power conversion apparatus further includes a second precharge switch. The second precharge switch is connected between the bus midpoint and the second alternating current end of the power conversion apparatus. The controller is configured to: when the bus voltage is less than twice the voltage amplitude of the power grid, control the second precharge switch to be turned on.

In this implementation, regardless of whether the power conversion circuit is of a two-level topology or a three-level topology, the power conversion apparatus can control the second precharge switch to be turned on, so that the bus midpoint can be electrically connected to the second alternating current end of the power conversion apparatus. The control manner is simpler and has stronger applicability.

With reference to any one of the third possible implementation of the first aspect to the fifth possible implementation of the first aspect, in a sixth possible implementation, the direct current end of the power conversion circuit includes a first direct current end, a second direct current end, and a third direct current end, the alternating current end of the power conversion circuit includes the first alternating current end and the second alternating current end, and the power conversion circuit includes a first bridge arm, a second bridge arm, a third bridge arm, and a fourth bridge arm. The first direct current end of the power conversion circuit is connected to the positive direct current bus. The second direct current end of the power conversion circuit is connected to the negative direct current bus. The third direct current end of the power conversion circuit is connected to the bus midpoint. The first alternating current end of the power conversion circuit is connected to a midpoint of the first bridge arm. The second alternating current end of the power conversion circuit is connected to a midpoint of the third bridge arm. The first bridge arm and the third bridge arm are connected in parallel between the first direct current end and the second direct current end of the power conversion circuit. The second bridge arm is connected between the third direct current end and the first alternating current end of the power conversion circuit. The fourth bridge arm is connected between the third direct current end and the second alternating current end of the power conversion circuit.

In this implementation, the power conversion circuit is of the three-level topology.

With reference to any one of the third possible implementation of the first aspect to the fifth possible implementation of the first aspect, in a seventh possible implementation, the direct current end of the power conversion circuit includes a first direct current end, a second direct current end, and a third direct current end, the alternating current end of the power conversion circuit includes the first alternating current end and the second alternating current end, the power conversion circuit includes a first bridge arm, a second bridge arm, a third bridge arm, and a fourth bridge arm, and each of the first bridge arm and the third bridge arm includes two upper bridge arm switches and two lower bridge arm switches that are all connected in series. The first direct current end of the power conversion circuit is connected to the positive direct current bus. The second direct current end of the power conversion circuit is connected to the negative direct current bus. The third direct current end of the power conversion circuit is connected to the bus midpoint. The first alternating current end of the power conversion circuit is connected to a midpoint of the second bridge arm. The second alternating current end of the power conversion circuit is connected to a midpoint of the fourth bridge arm. The first bridge arm and the third bridge arm are connected in parallel between the first direct current end and the second direct current end of the power conversion circuit. A midpoint of the first bridge arm and a midpoint of the third bridge arm are both connected to the third direct current end of the power conversion circuit. The second bridge arm is connected between a joint of the two upper bridge arm switches in the first bridge arm and a joint of the two lower bridge arm switches in the first bridge arm. The fourth bridge arm is connected between a joint of the two upper bridge arm switches in the third bridge arm and a joint of the two lower bridge arm switches in the third bridge arm.

In this implementation, the power conversion circuit is of the three-level topology.

With reference to the sixth possible implementation of the first aspect or the seventh possible implementation of the first aspect, in an eighth possible implementation, when the power conversion circuit is controlled to electrically connect the bus midpoint to the second alternating current end of the power conversion circuit:
The controller is configured to: when the bus voltage is less than twice the voltage amplitude of the power grid, control the fourth bridge arm to be connected.

In this implementation, the power conversion apparatus controls the fourth bridge arm to be connected, so that the bus midpoint can be electrically connected to the second alternating current end of the power conversion circuit. The control manner can be implemented by using the existing power conversion circuit in the power conversion apparatus, and no external circuit needs to be added, thereby helping reduce circuit costs.

With reference to any one of the third possible implementation of the first aspect to the fifth possible implementation of the first aspect, in a ninth possible implementation, the direct current end of the power conversion circuit includes a first direct current end and a second direct current end, the alternating current end of the power conversion circuit includes the first alternating current end and the second alternating current end, and the power conversion circuit includes a first bridge arm and a second bridge arm. The first direct current end of the power conversion circuit is connected to the positive direct current bus. The second direct current end of the power conversion circuit is connected to the negative direct current bus. The first bridge arm and the second bridge arm are connected in parallel between the first direct current end and the second direct current end of the power conversion circuit. A midpoint of the first bridge arm is connected to the first alternating current end of the power conversion circuit. A midpoint of the second bridge arm is connected to the second alternating current end of the power conversion circuit.

In this implementation, the power conversion circuit is of the two-level topology.

With reference to any one of the first aspect to the ninth possible implementation of the first aspect, in a tenth possible implementation, the controller is further configured to: when the bus voltage is equal to twice the voltage amplitude of the power grid, electrically disconnect the bus midpoint from the second alternating current end of the power conversion apparatus, and control the precharge circuit to electrically disconnect the first alternating current end of the power conversion apparatus separately from the positive direct current bus and the negative direct current bus.

With reference to the tenth possible implementation of the first aspect, in an eleventh possible implementation, the power conversion apparatus further includes an inverter capacitor. The inverter capacitor is connected between the alternating current end of the power conversion circuit and the bus midpoint. The controller is further configured to: when the bus midpoint is electrically disconnected from the second alternating current end of the power conversion apparatus, and when the first alternating current end of the power conversion apparatus is electrically disconnected separately from the positive direct current bus and the negative direct current bus, control the power conversion circuit to charge the inverter capacitor based on the bus voltage, to reduce a voltage difference between two ends of the grid-connected switch; and when the voltage difference is less than or equal to a voltage threshold, control the power conversion circuit to stop charging the inverter capacitor based on the bus voltage, and control the grid-connected switch to be turned on.

In this implementation, the power conversion apparatus charges the inverter capacitor when the bus voltage is equal to twice the voltage amplitude of the power grid, and controls the grid-connected switch to be turned on when the voltage difference between the two ends of the grid-connected switch meets the turn-on condition at a small difference, thereby effectively avoiding the sticking risk of the grid-connected switch.

### BRIEF DESCRIPTION OF DRAWINGS

FIG. 1 is a diagram of a structure of a rectifier provided in a conventional technology;
FIG. 2 is a diagram of an application scenario of a power conversion apparatus according to this application;
FIG. 3 is a diagram of a structure of a power conversion apparatus according to this application;
FIG. 4a is a diagram of another structure of a power conversion apparatus according to this application;
FIG. 4b is a diagram of another structure of a power conversion apparatus according to this application;
FIG. 4c is a diagram of another structure of a power conversion apparatus according to this application;
FIG. 4d is a diagram of another structure of a power conversion apparatus according to this application;
FIG. 5 is a diagram of another structure of a power conversion apparatus according to this application;
FIG. 6a is a diagram of another structure of a power conversion apparatus according to this application;
FIG. 6b is a diagram of another structure of a power conversion apparatus according to this application;
FIG. 6c is a diagram of another structure of a power conversion apparatus according to this application;
FIG. 6d is a diagram of another structure of a power conversion apparatus according to this application;
FIG. 7 is a diagram of another structure of a power conversion apparatus according to this application;
FIG. 8a is a diagram of another structure of a power conversion apparatus according to this application;
FIG. 8b is a diagram of another structure of a power conversion apparatus according to this application;
FIG. 8c is a diagram of another structure of a power conversion apparatus according to this application;
FIG. 8d is a diagram of another structure of a power conversion apparatus according to this application;
FIG. 9 is a diagram of another structure of a power conversion apparatus according to this application;
FIG. 10a is a diagram of another structure of a power conversion apparatus according to this application;
FIG. 10b is a diagram of another structure of a power conversion apparatus according to this application;
FIG. 10c is a diagram of another structure of a power conversion apparatus according to this application; and
FIG. 10d is a diagram of still another structure of a power conversion apparatus according to this application.

### DESCRIPTION OF EMBODIMENTS

A power conversion apparatus provided in this application may be used in a plurality of application fields such as a photovoltaic power generation field, an energy storage and power generation field, a new energy smart microgrid field, and a power transmission and distribution field. The power conversion apparatus provided in this application may be a PCS, an uninterruptible power supply (UPS), or the like, and is used in different application scenarios, for example, an energy storage and power supply scenario, a photovoltaic-and-storage hybrid power supply scenario, and a UPS power supply scenario. The following provides descriptions by using the energy storage and power supply scenario as an example.

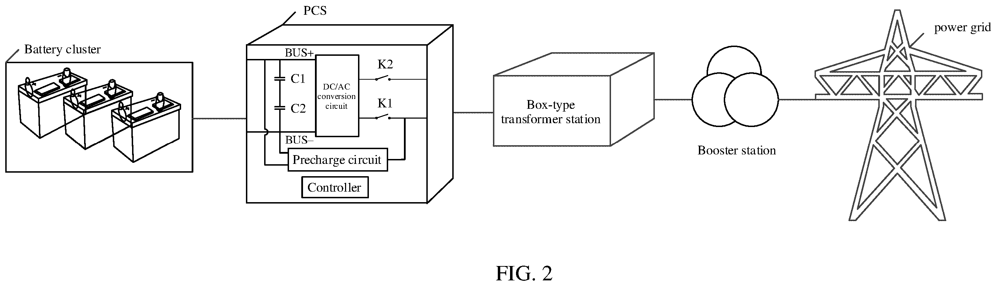

FIG. 2 is a diagram of an application scenario of a power conversion apparatus according to this application. In the energy storage and power supply scenario, the power conversion apparatus provided in this application is a PCS shown in FIG. 2. The PCS includes a direct current end, a positive direct current bus BUS+, a negative direct current bus BUS-, a positive bus capacitor C1, a negative bus capacitor C2, a DC/AC conversion circuit, a precharge circuit, grid-connected switches K1 and K2, a controller, a first alternating current end, and a second alternating current end. The direct current end of the PCS is connected to a battery cluster. The first alternating current end and the second alternating current end of the PCS are both sequentially connected to a power grid through a box-type transformer station and a booster station. The positive direct current bus BUS+ and the negative direct current bus BUS- are connected to the direct current end of the PCS. One end of the positive bus capacitor C1 is connected to the positive direct current bus BUS+, and the other end of the positive bus capacitor C1 is connected to the negative direct current bus BUS- through the negative bus capacitor C2. A joint between the positive bus capacitor C1 and the negative bus capacitor C2 is a bus midpoint. A direct current end of the DC/AC conversion circuit is separately connected to the positive direct current bus BUS+ and the negative direct current bus BUS-. An alternating current end of the DC/AC conversion circuit is separately connected to the first alternating current end and the second alternating current end of the PCS through the grid-connected switches K1 and K2. The precharge circuit is separately connected to the positive direct current bus BUS+, the negative direct current bus BUS-, and the first alternating current end of the PCS.

Before the PCS is connected to a grid, the controller is configured to: when a bus voltage between the positive direct current bus BUS+ and the negative direct current bus BUS- is less than twice a voltage amplitude of the power grid, electrically connect the bus midpoint to the second alternating current end of the PCS; when a voltage amplitude of the first alternating current end of the PCS is greater than a voltage amplitude of the second alternating current end of the PCS, control the precharge circuit to electrically connect the positive direct current bus BUS+ to the first alternating current end of the PCS, so that the power grid charges the positive bus capacitor C1; and when the voltage amplitude of the first alternating current end of the PCS is less than the voltage amplitude of the second alternating current end of the PCS, control the precharge circuit to electrically connect the negative direct current bus BUS- to the first alternating current end of the PCS, so that the power grid charges the negative bus capacitor C2 until the bus voltage is equal to twice the voltage amplitude of the power grid. Then, when the bus midpoint is electrically disconnected from the second alternating current end of the PCS, and when the first alternating current end of the PCS is electrically disconnected separately from the positive direct current bus BUS+ and the negative direct current bus BUS-, the controller controls the DC/AC conversion circuit to charge an inverter capacitor between the bus midpoint and the alternating current end of the DC/AC conversion circuit based on the bus voltage, to reduce a voltage difference between two ends of each of all grid-connected switches. When the voltage differences between the two ends of each of all grid-connected switches are less than or equal to a voltage threshold, that is, when all the grid-connected switches meet a turn-on condition at a small voltage difference, the controller stops controlling the DC/AC conversion circuit to charge the inverter capacitor based on the bus voltage, and controls the grid-connected switches K1 and K2 to be both turned on, so that the PCS is connected to the grid.

After the PCS is connected to the grid, the controller inverts a direct current output by the battery cluster into an alternating current, and outputs the alternating current to the box-type transformer station connected to the controller. The box-type transformer station performs voltage step-up on an alternating current input by an input end of the box-type transformer station, and then outputs an alternating current obtained through voltage step-up to the booster station. The booster station performs voltage step-up on an alternating current input by an input end of the booster station, to obtain an alternating current that meets a requirement of the power grid. Therefore, power is supplied to different types of power-consuming devices such as the power grid.

It may be understood that the PCS electrically connects the bus midpoint to the second alternating current end of the PCS when the bus voltage is less than twice the voltage amplitude of the power grid, and controls the precharge circuit to electrically connect the positive direct current bus BUS+ or the negative direct current bus BUS- to the first alternating current end of the PCS, so that the power grid charges the positive bus capacitor C1 or the negative bus capacitor C2. In this way, the bus voltage can be raised to a voltage at least higher than the voltage amplitude of the power grid, and can be raised to a voltage twice the voltage amplitude of the power grid at most, so that the grid-connected switches in the PCS meets the turn-on condition at a small voltage difference, to avoid a sticking risk.

The foregoing is merely an example of the application scenario of the power conversion apparatus provided in this application, but is not exhaustive. The application scenario is not limited in this application.

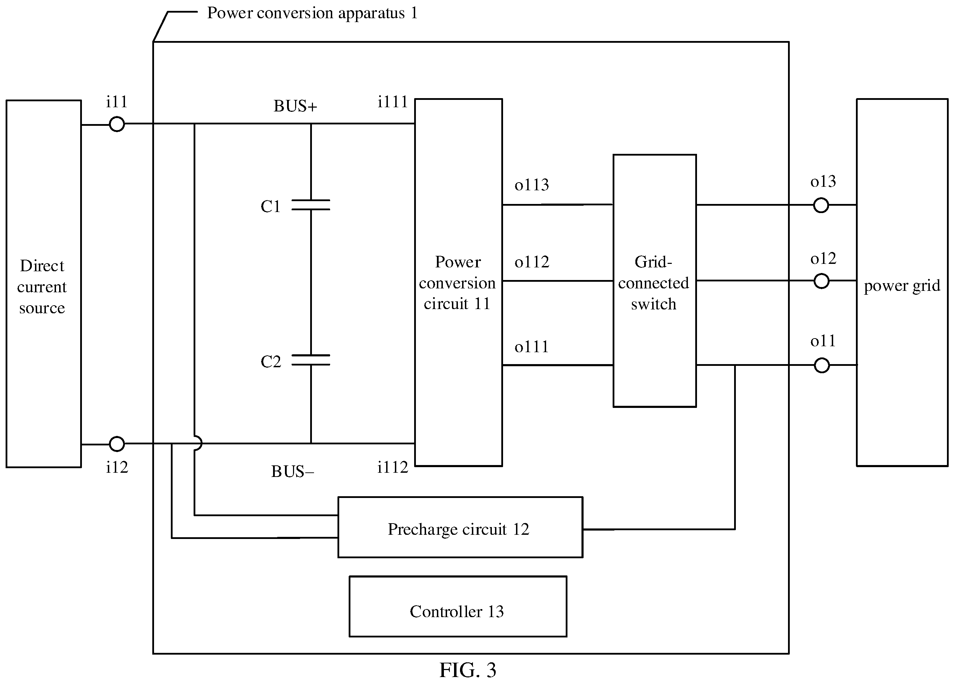

With reference to FIG. 3 to FIG. 10d, the following describes an example of a working principle of a power conversion apparatus provided in this application.

FIG. 3 is a diagram of a structure of a power conversion apparatus according to this application. As shown in FIG. 3, the power conversion apparatus 1 includes a direct current end (including a first direct current end i11 and a second direct current end i12), a positive direct current bus BUS+, a negative direct current bus BUS-, a positive bus capacitor C1, a negative bus capacitor C2, a power conversion circuit 11, a precharge circuit 12, a grid-connected switch, a controller 13, a first alternating current end o11, a second alternating current end o12, and a third alternating current end o13. The first direct current end i11 and the second direct current end i12 of the power conversion apparatus 1 are configured to connect to a direct current source (including a battery cluster, a capacitor, and the like). The first alternating current end o11, the second alternating current end o12, and the third alternating current end o13 of the power conversion apparatus 1 are configured to connect to a power grid. The positive direct current bus BUS+ and the negative direct current bus BUS- are connected to the direct current end of the power conversion apparatus 1. Specifically, the positive direct current bus BUS+ is connected to the first direct current end i11 of the power conversion apparatus 1, and the negative direct current bus BUS- is connected to the second direct current end i12 of the power conversion apparatus 1. One end of the positive bus capacitor C1 is connected to the positive direct current bus BUS+, and the other end of the positive bus capacitor C1 is connected to the negative direct current bus BUS-through the negative bus capacitor C2. A joint between the positive bus capacitor C1 and the negative bus capacitor C2 is a bus midpoint. A direct current end of the power conversion circuit 11 is separately connected to the positive direct current bus BUS+ and the negative direct current bus BUS-. An alternating current end of the power conversion circuit 11 is connected to the first alternating current end o11, the second alternating current end o12, and the third alternating current end o13 of the power conversion apparatus 1 through the grid-connected switch. Specifically, the direct current end of the power conversion circuit 11 includes a first direct current end i111 and a second direct current end i112. The alternating current end of the power conversion circuit 11 includes a first alternating current end o111, a second alternating current end o112, and a third alternating current end o113. The first direct current end i111 of the power conversion circuit 11 is connected to the positive direct current bus BUS+. The second direct current end i112 of the power conversion circuit 11 is connected to the negative direct current bus BUS-. The first alternating current end o111, the second alternating current end o112, and the third alternating current end o113 of the power conversion circuit 11 are connected to the grid-connected switches, and then are respectively connected to the first alternating current end o11, the second alternating current end o12, and the third alternating current end o13 of the power conversion apparatus 1. The precharge circuit 12 is separately connected to the positive direct current bus BUS+, the negative direct current bus BUS-, and the first alternating current end o11 of the power conversion apparatus 1.

In an implementation, before the power conversion apparatus 1 is connected to a grid, that is, before the grid-connected switch is turned on, the controller 13 is configured to: when a bus voltage between the positive direct current bus BUS+ and the negative direct current bus BUS- is less than twice a voltage amplitude of the power grid, electrically connect the bus midpoint to the second alternating current end o12 of the power conversion apparatus 1; when a voltage amplitude of the first alternating current end o11 of the power conversion apparatus 1 is greater than a voltage amplitude of the second alternating current end o12 of the power conversion apparatus 1, control the precharge circuit 12 to electrically connect the positive direct current bus BUS+ to the first alternating current end o11 of the power conversion apparatus 1, so that the power grid charges the positive bus capacitor C1; and when the voltage amplitude of the first alternating current end o11 of the power conversion apparatus 1 is less than the voltage amplitude of the second alternating current end o12 of the power conversion apparatus 1, control the precharge circuit 12 to electrically connect the negative direct current bus BUS- to the first alternating current end o11 of the power conversion apparatus 1, so that the power grid charges the negative bus capacitor C2.

In this implementation, the power conversion apparatus 1 electrically connects the bus midpoint to the second alternating current end o12 of the power conversion apparatus 1 when the bus voltage is less than twice the voltage amplitude of the power grid, and controls the precharge circuit 12 to electrically connect the positive direct current bus BUS+ or the negative direct current bus BUS- to the first alternating current end o11 of the power conversion apparatus 1, so that the power grid charges the positive bus capacitor C1 or the negative bus capacitor C2. In this way, the bus voltage can be raised to a voltage at least higher than the voltage amplitude of the power grid, and can be raised to a voltage twice the voltage amplitude of the power grid at most, so that the grid-connected switch in the power conversion apparatus 1 meets a turn-on condition at a small voltage difference, to avoid a sticking risk.

It should be noted that a quantity of grid-connected switches that are connected between an i^{th} alternating current end of the power conversion apparatus 1 and an i^{th} alternating current end of the power conversion circuit 11 is not limited in this application. For ease of description, the following uses an example in which the quantity of grid-connected switches that are connected between the i^{th} alternating current end of the power conversion apparatus 1 and the i^{th} alternating current end of the power conversion circuit 11 is 2 for description.

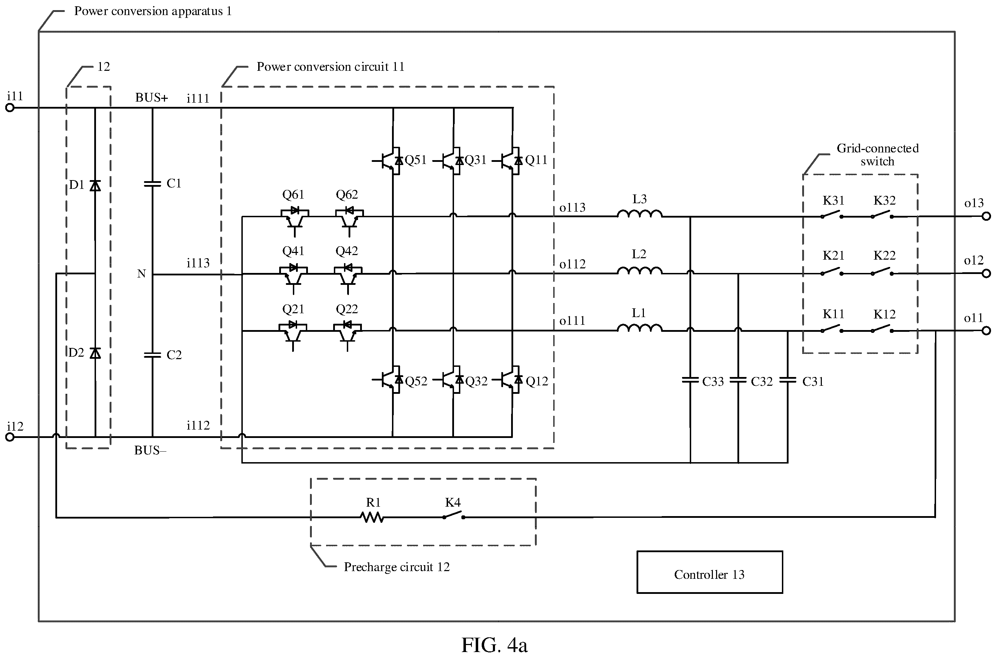

For example, FIG. 4a is a diagram of another structure of a power conversion apparatus according to this application. As shown in FIG. 4a, a direct current end of the power conversion circuit 11 includes a first direct current end i111, a second direct current end i112, and a third direct current end i113. An alternating current end of the power conversion circuit 11 includes a first alternating current end o111, a second alternating current end o112, and a third alternating current end o113. The power conversion circuit 11 includes a first bridge arm, a second bridge arm, a third bridge arm, a fourth bridge arm, a fifth bridge arm, and a sixth bridge arm. The first bridge arm includes an upper bridge arm switch Q11 and a lower bridge arm switch Q12 that are connected in series. The second bridge arm includes an upper bridge arm switch Q21 and a lower bridge arm switch Q22 that are connected in series. The third bridge arm includes an upper bridge arm switch Q31 and a lower bridge arm switch Q32 that are connected in series. The fourth bridge arm includes an upper bridge arm switch Q41 and a lower bridge arm switch Q42 that are connected in series. The fifth bridge arm includes an upper bridge arm switch Q51 and a lower bridge arm switch Q52 that are connected in series. The sixth bridge arm includes an upper bridge arm switch Q61 and a lower bridge arm switch Q62 that are connected in series. The first direct current end i111 of the power conversion circuit 11 is connected to the positive direct current bus BUS+. The second direct current end i112 of the power conversion circuit 11 is connected to the negative direct current bus BUS-. The third direct current end i113 of the power conversion circuit 11 is connected to a bus midpoint N. The first alternating current end o111 of the power conversion circuit 11 is connected to a midpoint of the first bridge arm. The second alternating current end o112 of the power conversion circuit 11 is connected to a midpoint of the third bridge arm. The third alternating current end o113 of the power conversion circuit 11 is connected to a midpoint of the fifth bridge arm. A midpoint of any bridge arm is a joint between an upper bridge arm switch and a lower bridge arm switch of the bridge arm. The first bridge arm, the third bridge arm, and the fifth bridge arm are connected in parallel between the first direct current end i111 and the second direct current end i112 of the power conversion circuit 11. The second bridge arm is connected between the third direct current end i113 and the first alternating current end o111 of the power conversion circuit 11. The fourth bridge arm is connected between the third direct current end i113 and the second alternating current end o112 of the power conversion circuit 11. The sixth bridge arm is connected between the third direct current end i113 and the third alternating current end o113 of the power conversion circuit 11. The bridge arm switch of each bridge arm in the power conversion circuit 11 is a controllable switch. The controllable switch includes a metal-oxide semiconductor field-effect transistor (MOSFET), an insulated gate bipolar transistor (IGBT), a gallium nitride (GaN) transistor, or the like.

The grid-connected switches include first grid-connected switches K11 and K12, second grid-connected switches K21 and K22, and third grid-connected switches K31 and K32. The first alternating current end o111 of the power conversion circuit 11 is connected to the first alternating current end o11 of the power conversion apparatus 1 through the first grid-connected switches K11 and K12 that are connected in series. The second alternating current end o112 of the power conversion circuit 11 is connected to the second alternating current end o12 of the power conversion apparatus 1 through the second grid-connected switches K21 and K22 that are connected in series. The third alternating current end o113 of the power conversion circuit 11 is connected to the third alternating current end o13 of the power conversion apparatus 1 through the third grid-connected switches K31 and K32 that are connected in series. For example, the grid-connected switches may be mechanical switches such as relays or contactors. Optionally, the power conversion apparatus 1 further includes inductors L1 to L3. The first alternating current end o111 of the power conversion circuit 11 is connected to the inductor L1 and then is connected to the first alternating current end o11 of the power conversion apparatus 1 through the first grid-connected switches K11 and K12 that are connected in series. The second alternating current end o112 of the power conversion circuit 11 is connected to the inductor L2 and then is connected to the second alternating current end o12 of the power conversion apparatus 1 through the second grid-connected switches K21 and K22 that are connected in series. The third alternating current end o113 of the power conversion circuit 11 is connected to the inductor L3 and then is connected to the third alternating current end o13 of the power conversion apparatus 1 through the third grid-connected switches K31 and K32 that are connected in series.

The precharge circuit 12 includes a precharge bridge arm, a precharge resistor R, and a first precharge switch K4. The precharge bridge arm includes an upper bridge arm switch and a lower bridge arm switch. The bridge arm switches of the precharge bridge arm may be controllable switches, or may be uncontrollable switches. Herein, an example in which the bridge arm switches of the precharge bridge arm are all uncontrollable diodes is used for description. The precharge bridge arm includes an upper bridge arm diode D1 and a lower bridge arm diode D2. The upper bridge arm diode D1 and the lower bridge arm diode D2 are connected in series between the positive direct current bus BUS+ and the negative direct current bus BUS-. Specifically, a cathode of the upper bridge arm diode D1 is connected to the positive direct current bus BUS+, an anode of the upper bridge arm diode D1 is connected to a cathode of the lower bridge arm diode D2, and an anode of the lower bridge arm diode D2 is connected to the negative direct current bus BUS-. The precharge resistor R and the first precharge switch K4 are connected in series between a midpoint of the precharge bridge arm and the first alternating current end o11 of the power conversion apparatus. In addition, the first precharge switch K4 may be a mechanical switch, or may be a controllable semiconductor switch.

The power conversion apparatus 1 further includes inverter capacitors C31 to C33. The inverter capacitor C31 is connected between the first alternating current end o111 of the power conversion circuit 11 and the bus midpoint N. The inverter capacitor C32 is connected between the second alternating current end o112 of the power conversion circuit 11 and the bus midpoint N. The inverter capacitor C33 is connected between the third alternating current end o113 of the power conversion circuit 11 and the bus midpoint N. Optionally, one end of the inverter capacitor C31 is connected to the bus midpoint N, and the other end of the inverter capacitor C31 is connected to the first alternating current end o111 of the power conversion circuit 11 through the inductor L1. One end of the inverter capacitor C32 is connected to the bus midpoint N, and the other end of the inverter capacitor C32 is connected to the second alternating current end o112 of the power conversion circuit 11 through the inductor L2. One end of the inverter capacitor C33 is connected to the bus midpoint N, and the other end of the inverter capacitor C33 is connected to the third alternating current end o113 of the power conversion circuit 11 through the inductor L3.

In an implementation, before the power conversion apparatus 1 is connected to a grid, and when a bus voltage is less than twice a voltage amplitude of the power grid, the controller 13 controls the second grid-connected switches K21 and K22 to be both turned on, and controls the power conversion circuit 11 to electrically connect the bus midpoint N to the second alternating current end o112 of the power conversion circuit 11, to electrically connect the bus midpoint N to the second alternating current end o12 of the power conversion apparatus 1, until the bus voltage is equal to twice the voltage amplitude of the power grid. When the bus voltage is less than twice the voltage amplitude of the power grid, the controller 13 further controls the precharge circuit 12 to electrically connect the positive direct current bus BUS+ or the negative direct current bus BUS- to the first alternating current end o11 of the power conversion apparatus 1, until the bus voltage is equal to twice the voltage amplitude of the power grid. Then, when the bus midpoint N is electrically disconnected from the second alternating current end o12 of the power conversion apparatus 1, and when the first alternating current end o11 of the power conversion apparatus 1 is electrically disconnected separately from the positive direct current bus BUS+ and the negative direct current bus BUS-, the controller 13 controls the power conversion circuit 11 to charge the inverter capacitors C31 to C33 based on the bus voltage, to reduce a voltage difference between two ends of each of the first grid-connected switches to the third grid-connected switches. In addition, when the voltage difference between the two ends of each grid-connected switch is less than or equal to a voltage threshold, the controller 13 controls the power conversion circuit 11 to stop charging the inverter capacitors C31 to C33 based on the bus voltage, and controls the first grid-connected switches to the third grid-connected switches to be turned on, so that the power conversion apparatus 1 is connected to the grid. The voltage threshold is determined by a turn-on capability of the grid-connected switch with a voltage difference.

Specifically, before the power conversion apparatus 1 is connected to the grid, and when the bus voltage is less than twice the voltage amplitude of the power grid, the controller 13 controls the second grid-connected switches K21 and K22 to be both turned on, and controls the fourth bridge arm to be connected, to electrically connect the bus midpoint N to the second alternating current end o12 of the power conversion apparatus 1, until the bus voltage is equal to twice the voltage amplitude of the power grid. When the bus voltage is less than twice the voltage amplitude of the power grid, and when the voltage amplitude of the first alternating current end o11 of the power conversion apparatus 1 is greater than the voltage amplitude of the second alternating current end o12 of the power conversion apparatus 1, the controller 13 further controls the precharge circuit 12 to electrically connect the positive direct current bus BUS+ to the first alternating current end o11 of the power conversion apparatus 1, that is, controls the first precharge switch K4 to be turned on. In this case, the upper bridge arm switch D1 is in an on state, to charge the positive bus capacitor C1 based on an alternating current between the first alternating current end o11 and the second alternating current end o12 of the power conversion apparatus 1 until the bus voltage is equal to twice the voltage amplitude of the power grid. Alternatively, when the bus voltage is less than twice the voltage amplitude of the power grid, and when the voltage amplitude of the first alternating current end o11 of the power conversion apparatus 1 is less than the voltage amplitude of the second alternating current end o12 of the power conversion apparatus 1, the controller 13 further controls the precharge circuit 12 to electrically connect the negative direct current bus BUS- to the first alternating current end o11 of the power conversion apparatus 1, that is, controls the first precharge switch K4 to be turned on. In this case, the lower bridge arm switch D2 is in an on state, to charge the negative bus capacitor C2 based on an alternating current between the first alternating current end o11 and the second alternating current end o12 of the power conversion apparatus 1 until the bus voltage is equal to twice the voltage amplitude of the power grid.

Then, when the second grid-connected switches K21 and K22 are turned off, the fourth bridge arm is turned off, and the first precharge switch K4 is turned off, it indicates that the power grid no longer charges the positive bus capacitor C1 and the negative bus capacitor C2, and the controller 13 controls the upper bridge arm switch Q11 and the lower bridge arm switches Q42 and Q32 to be all turned on, to charge the inverter capacitor C31 based on the bus voltage, thereby reducing the voltage difference between the two ends of the first grid-connected switch. When the voltage difference between the two ends of the first grid-connected switch is less than or equal to the voltage threshold, the controller 13 controls the upper bridge arm switch Q11 and the lower bridge arm switches Q42 and Q32 to be all turned off, and controls the first grid-connected switch to be turned on. Then, the controller 13 controls the upper bridge arm switch Q31 and the lower bridge arm switches Q62 and Q52 to be turned on, to charge the inverter capacitor C32 based on the bus voltage, thereby reducing the voltage difference between the two ends of the second grid-connected switch. When the voltage difference between the two ends of the second grid-connected switch is less than or equal to the voltage threshold, the controller 13 controls the upper bridge arm switch Q31 and the lower bridge arm switches Q62 and Q52 to be all turned off, and controls the second grid-connected switch to be turned on. Then, the controller 13 controls the upper bridge arm switch Q51 and the lower bridge arm switches Q42 and Q32 to be turned on, to charge the inverter capacitor C33 based on the bus voltage, thereby reducing the voltage difference between the two ends of the third grid-connected switch. When the voltage difference between the two ends of the third grid-connected switch is less than or equal to the voltage threshold, the controller 13 controls the upper bridge arm switch Q51 and the lower bridge arm switches Q42 and Q32 to be all turned off, and controls the third grid-connected switch to be turned on. In this way, the power conversion apparatus 1 is connected to the grid.

In this embodiment of this application, when the bus voltage is less than twice the voltage amplitude of the power grid, the power conversion apparatus 1 controls the second grid-connected switches and the power conversion circuit 11 to electrically connect the bus midpoint to the second alternating current end o12 of the power conversion apparatus 1, and controls the precharge circuit 12 to electrically connect the positive direct current bus BUS+ or the negative direct current bus BUS- to the first alternating current end o11 of the power conversion apparatus 1, so that the power grid charges the positive bus capacitor C1 or the negative bus capacitor C2. In this way, the bus voltage can be raised to a voltage at least higher than the voltage amplitude of the power grid, and can be raised to a voltage twice the voltage amplitude of the power grid at most, so that the grid-connected switches in the power conversion apparatus 1 meet a turn-on condition at a small voltage difference, to avoid a sticking risk.

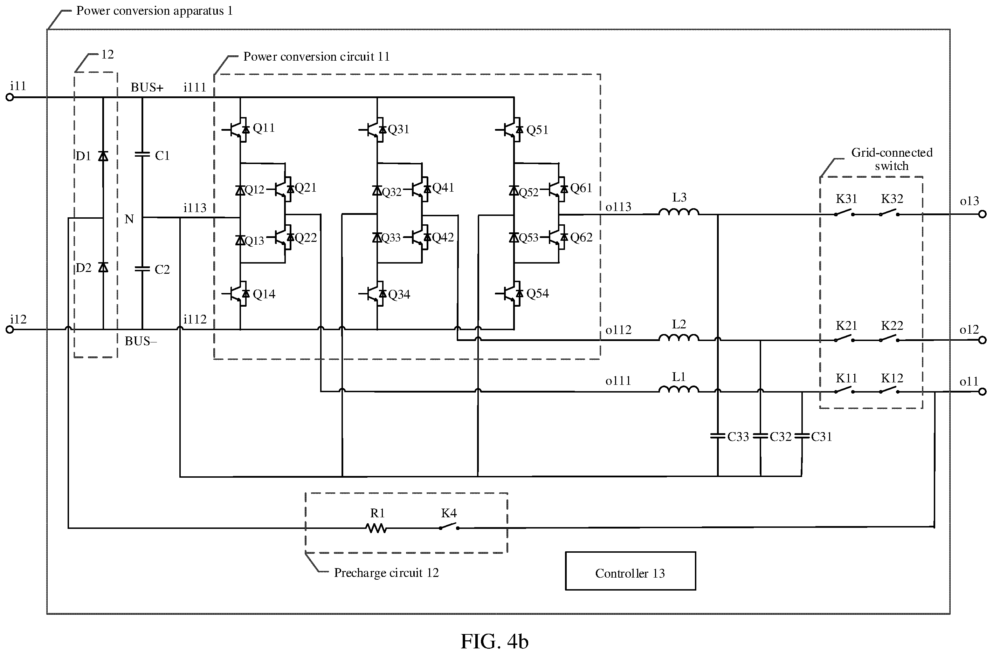

For example, FIG. 4b is a diagram of another structure of a power conversion apparatus according to this application. As shown in FIG. 4b, compared with the power conversion apparatus 1 shown in FIG. 4a, the power conversion circuit 11 shown in FIG. 4b is different from the power conversion circuit 11 shown in FIG. 4a. Specifically, as shown in FIG. 4b, the power conversion circuit 11 includes a first bridge arm, a second bridge arm, a third bridge arm, a fourth bridge arm, a fifth bridge arm, and a sixth bridge arm. Each of the first bridge arm, the third bridge arm, and the fifth bridge arm includes two upper bridge arm switches and two lower bridge arm switches that are all connected in series. Each of the second bridge arm, the fourth bridge arm, and the sixth bridge arm includes an upper bridge arm switch and a lower bridge arm switch that are connected in series. The bridge arm switch of each of the first bridge arm, the third bridge arm, and the fifth bridge arm may be a controllable switch. Alternatively, both a controllable switch and an uncontrollable switch may be included. The bridge arm switch of each of the second bridge arm, the fourth bridge arm, and the sixth bridge arm is a controllable switch. Herein, an example in which each of the first bridge arm, the third bridge arm, and the fifth bridge arm includes both a controllable switch and an uncontrollable diode is used for description. The first bridge arm includes an upper bridge arm controllable switch Q11, an upper bridge arm diode Q12, a lower bridge arm diode Q13, and a lower bridge arm controllable switch Q14 that are connected in series. The third bridge arm includes an upper bridge arm controllable switch Q31, an upper bridge arm diode Q32, a lower bridge arm diode Q33, and a lower bridge arm controllable switch Q34 that are connected in series. The fifth bridge arm includes an upper bridge arm controllable switch Q51, an upper bridge arm diode Q52, a lower bridge arm diode Q53, and a lower bridge arm controllable switch Q54 that are connected in series. The second bridge arm includes an upper bridge arm controllable switch Q21 and a lower bridge arm controllable switch Q22 that are connected in series. The fourth bridge arm includes an upper bridge arm controllable switch Q41 and a lower bridge arm controllable switch Q42 that are connected in series. The sixth bridge arm includes an upper bridge arm controllable switch Q61 and a lower bridge arm controllable switch Q62 that are connected in series. The first bridge arm, the third bridge arm, and the fifth bridge arm are connected in parallel between the first direct current end i111 and the second direct current end i112 of the power conversion circuit 11. A midpoint of the first bridge arm, a midpoint of the third bridge arm, and a midpoint of the fifth bridge arm are all connected to the third direct current end i113 of the power conversion circuit 11. The second bridge arm is connected between a cathode of the upper bridge arm diode Q12 and an anode of the lower bridge arm diode Q13, and a midpoint of the second bridge arm is connected to the first alternating current end o111 of the power conversion circuit 11. The fourth bridge arm is connected between a cathode of the upper bridge arm diode Q32 and an anode of the lower bridge arm diode Q33, and a midpoint of the fourth bridge arm is connected to the second alternating current end o112 of the power conversion circuit 11. The sixth bridge arm is connected between a cathode of the upper bridge arm diode Q52 and an anode of the lower bridge arm diode Q53, and a midpoint of the sixth bridge arm is connected to the third alternating current end o113 of the power conversion circuit 11.

In an implementation, before the power conversion apparatus 1 is connected to a grid, and when a bus voltage is less than twice a voltage amplitude of the power grid, the controller 13 controls the second grid-connected switches K21 and K22 to be both turned on, and controls the power conversion circuit 11 to electrically connect the bus midpoint N to the second alternating current end o112 of the power conversion circuit 11, to electrically connect the bus midpoint N to the second alternating current end o12 of the power conversion apparatus 1, until the bus voltage is equal to twice the voltage amplitude of the power grid. Specifically, when the bus voltage is less than twice the voltage amplitude of the power grid, the controller 13 controls the second grid-connected switches K21 and K22 to be both turned on, and controls the fourth bridge arm to be connected, to electrically connect the bus midpoint N to the second alternating current end o12 of the power conversion apparatus 1, until the bus voltage is equal to twice the voltage amplitude of the power grid.

Herein, for another specific implementation in implementations of connecting the power conversion apparatus 1 to the grid, other than the implementation of electrically connecting the bus midpoint N to the second alternating current end o12 of the power conversion apparatus 1, refer to descriptions of corresponding parts for the power conversion apparatus 1 shown in FIG. 4a. Details are not described herein again.

In this embodiment of this application, when the bus voltage is less than twice the voltage amplitude of the power grid, the power conversion apparatus 1 controls the second grid-connected switches and the power conversion circuit 11 to electrically connect the bus midpoint to the second alternating current end o12 of the power conversion apparatus 1, and controls the precharge circuit 12 to electrically connect the positive direct current bus BUS+ or the negative direct current bus BUS- to the first alternating current end o11 of the power conversion apparatus 1, so that the power grid charges the positive bus capacitor C1 or the negative bus capacitor C2. In this way, the bus voltage can be raised to a voltage at least higher than the voltage amplitude of the power grid, and can be raised to a voltage twice the voltage amplitude of the power grid at most, so that the grid-connected switches in the power conversion apparatus 1 meet a turn-on condition at a small voltage difference, to avoid a sticking risk. In addition, a structure of the power conversion circuit 11 is diverse, so that the structure of the power conversion apparatus 1 is diverse and highly flexible.

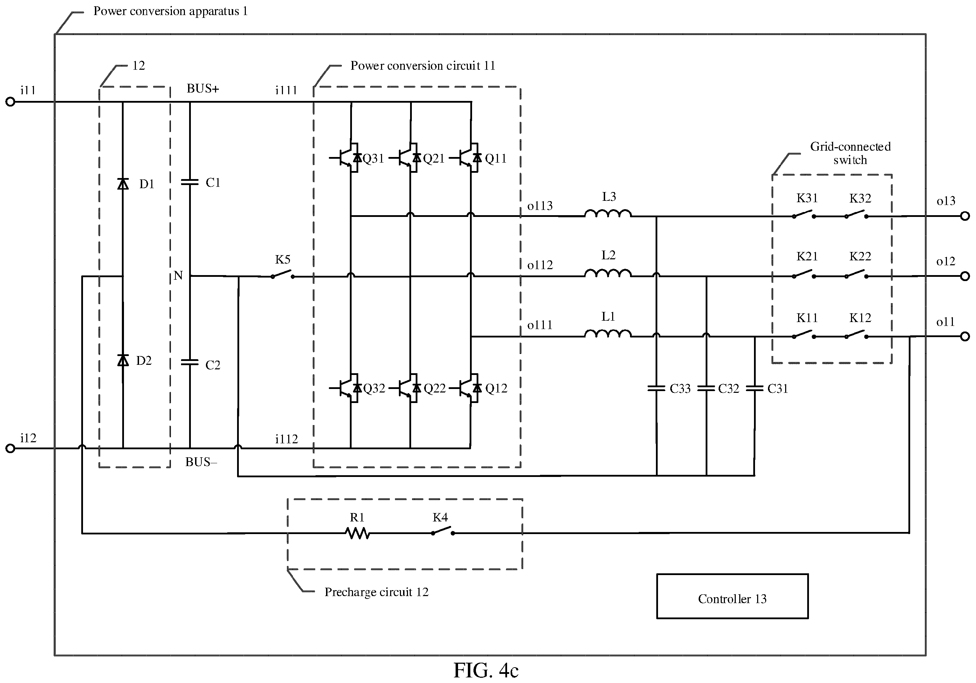

For example, FIG. 4c is a diagram of another structure of a power conversion apparatus according to this application. As shown in FIG. 4c, compared with the power conversion apparatus 1 shown in FIG. 4a, the power conversion circuit 11 shown in FIG. 4c is different from the power conversion circuit 11 shown in FIG. 4a, and the power conversion apparatus 1 shown in Fig.4c further includes a second precharge switch K5. Specifically, as shown in FIG. 4c, a direct current end of the power conversion circuit 11 includes a first direct current end i111 and a second direct current end i112. The first direct current end i111 of the power conversion circuit 11 is connected to the positive direct current bus BUS+. The second direct current end i112 of the power conversion circuit 11 is connected to the negative direct current bus BUS-. The power conversion circuit 11 includes a first bridge arm, a second bridge arm, and a third bridge arm. The first bridge arm includes an upper bridge arm switch Q11 and a lower bridge arm switch Q12 that are connected in series. The second bridge arm includes an upper bridge arm switch Q21 and a lower bridge arm switch Q22 that are connected in series. The third bridge arm includes an upper bridge arm switch Q31 and a lower bridge arm switch Q32 that are connected in series. The first bridge arm, the second bridge arm, and the third bridge arm are connected in parallel between the first direct current end i111 and the second direct current end i112 of the power conversion circuit 11. A midpoint of the first bridge arm is connected to the first alternating current end o111 of the power conversion circuit 11, a midpoint of the second bridge arm is connected to the second alternating current end o112 of the power conversion circuit 11, and a midpoint of the third bridge arm is connected to the third alternating current end o113 of the power conversion circuit 11. The second precharge switch K5 is connected between the bus midpoint N and the second alternating current end o112 of the power conversion circuit 11. The second precharge switch K5 may be a mechanical switch, or may be a controllable semiconductor switch.

In an implementation, before the power conversion apparatus 1 is connected to a grid, and when a bus voltage is less than twice a voltage amplitude of the power grid, the controller 13 controls the second grid-connected switches K21 and K22 to be both turned on, and controls the second precharge switch K5 to be turned on, to electrically connect the bus midpoint N to the second alternating current end o12 of the power conversion apparatus 1, until the bus voltage is equal to twice the voltage amplitude of the power grid.

Then, when the second grid-connected switches K21 and K22 are turned off, the second precharge switch K5 is turned off, and the first precharge switch K4 is turned off, the controller 13 controls the power conversion circuit 11 to charge the inverter capacitors C31 to C33 based on the bus voltage, and controls the grid-connected switches to be turned on when the grid-connected switches meet a turn-on condition at a small voltage difference.

Herein, for another specific implementation in implementations of connecting the power conversion apparatus 1 to the grid, other than the implementation of electrically connecting the bus midpoint N to the second alternating current end o12 of the power conversion apparatus 1, refer to descriptions of corresponding parts for the power conversion apparatus 1 shown in FIG. 4a. Details are not described herein again.

In this embodiment of this application, when the bus voltage is less than twice the voltage amplitude of the power grid, the power conversion apparatus 1 controls the second grid-connected switches and the second precharge switch to be all turned on, and controls the precharge circuit 12 to electrically connect the positive direct current bus BUS+ or the negative direct current bus BUS- to the first alternating current end o11 of the power conversion apparatus 1, so that the power grid charges the positive bus capacitor C1 or the negative bus capacitor C2. In this way, the bus voltage can be raised to a voltage at least higher than the voltage amplitude of the power grid, and can be raised to a voltage twice the voltage amplitude of the power grid at most, so that the grid-connected switches in the power conversion apparatus 1 meet a turn-on condition at a small voltage difference, to avoid a sticking risk. In addition, the structure and a control manner of the power conversion apparatus 1 are diverse and highly flexible.

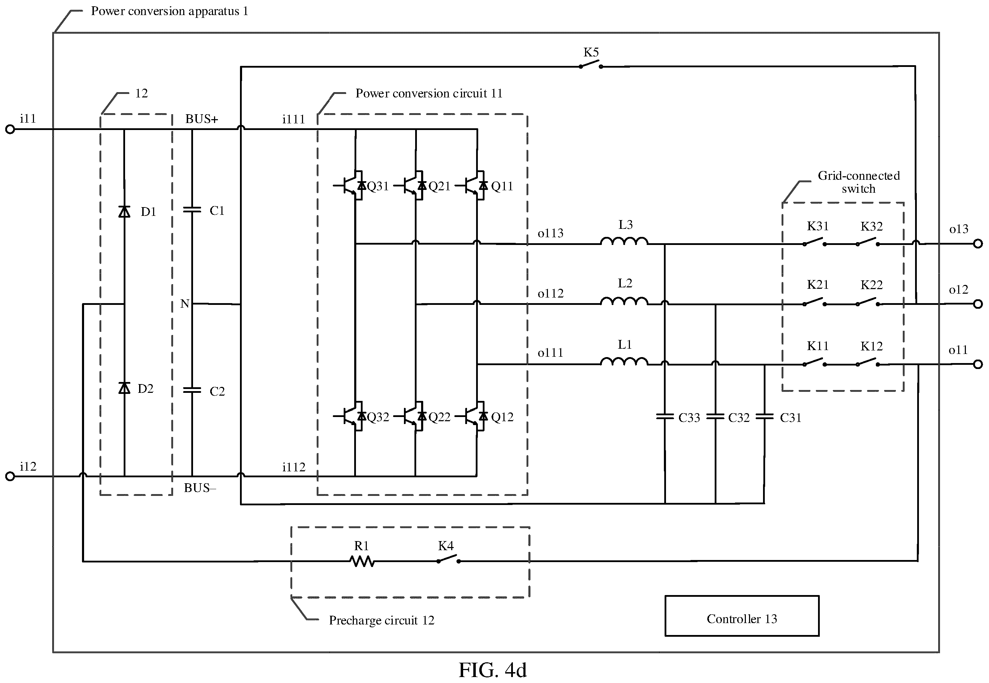

For example, FIG. 4d is a diagram of another structure of a power conversion apparatus according to this application. As shown in FIG. 4d, compared with the power conversion apparatus 1 shown in FIG. 4c, the position of the second precharge switch shown in FIG. 4d is different from the position of the second precharge switch shown in FIG. 4c. Specifically, as shown in FIG. 4d, the second precharge switch K5 is connected between the bus midpoint N and the second alternating current end o12 of the power conversion apparatus 1.

In an implementation, before the power conversion apparatus 1 is connected to a grid, and when a bus voltage is less than twice a voltage amplitude of the power grid, the controller 13 controls the second precharge switch K5 to be turned on, to electrically connect the bus midpoint N to the second alternating current end o12 of the power conversion apparatus 1, until the bus voltage is equal to twice the voltage amplitude of the power grid.

Then, when the second precharge switch K5 is turned off, and the first precharge switch K4 is turned off, the controller 13 controls the power conversion circuit 11 to charge the inverter capacitors C31 to C33 based on the bus voltage, and controls the grid-connected switches to be turned on when the grid-connected switches meet a turn-on condition at a small voltage difference.

Herein, for another specific implementation in implementations of connecting the power conversion apparatus 1 to the grid, other than the implementation of electrically connecting the bus midpoint N to the second alternating current end o12 of the power conversion apparatus 1, refer to descriptions of corresponding parts for the power conversion apparatus 1 shown in FIG. 4a. Details are not described herein again.

It should be noted that in this implementation, a manner in which the second precharge switch is controlled to be turned on, to electrically connect the bus midpoint N to the second alternating current end o12 of the power conversion apparatus 1 is also applicable to the power conversion apparatus 1 shown in FIG. 4a and FIG. 4b.

In this embodiment of this application, when the bus voltage is less than twice the voltage amplitude of the power grid, the power conversion apparatus 1 controls the second precharge switch to be turned on, and controls the precharge circuit 12 to electrically connect the positive direct current bus BUS+ or the negative direct current bus BUS- to the first alternating current end o11 of the power conversion apparatus 1, so that the power grid charges the positive bus capacitor C1 or the negative bus capacitor C2. In this way, the bus voltage can be raised to a voltage at least higher than the voltage amplitude of the power grid, and can be raised to a voltage twice the voltage amplitude of the power grid at most, so that the grid-connected switches in the power conversion apparatus 1 meet a turn-on condition at a small voltage difference, to avoid a sticking risk. In addition, the structure and a control manner of the power conversion apparatus 1 are diverse and highly flexible.

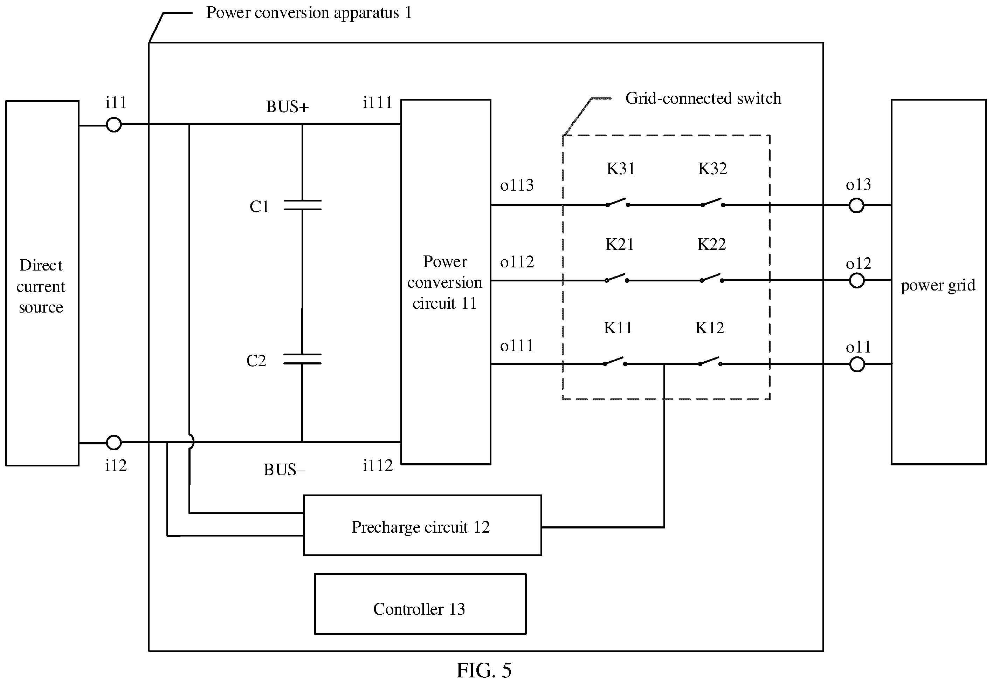

FIG. 5 is a diagram of a structure of a power conversion apparatus according to this application. As shown in FIG. 5, compared with the power conversion apparatus 1 shown in FIG. 3, the position of the precharge circuit 12 shown in FIG. 5 is different from the position of the precharge circuit 12 shown in FIG. 3. Specifically, as shown in FIG. 5, the grid-connected switches include first grid-connected switches K11 and K12, second grid-connected switches K21 and K22, and third grid-connected switches K31 and K32. The precharge circuit 12 is separately connected to the positive direct current bus BUS+ and the negative direct current bus BUS-. The precharge circuit 12 is further connected to the first alternating current end o11 of the power conversion apparatus 1 through the first grid-connected switch K12. Optionally, the precharge circuit 12 may be further connected to the first alternating current end o11 of the power conversion apparatus 1 sequentially through the first grid-connected switches K11 and K12.

In an implementation, before the power conversion apparatus 1 is connected to a grid, the controller 13 is configured to: when a bus voltage between the positive direct current bus BUS+ and the negative direct current bus BUS- is less than twice a voltage amplitude of the power grid, electrically connect the bus midpoint to the second alternating current end o12 of the power conversion apparatus 1, and control the first grid-connected switch K12 to be turned on; when a voltage amplitude of the first alternating current end o11 of the power conversion apparatus 1 is greater than a voltage amplitude of the second alternating current end o12 of the power conversion apparatus 1, control the precharge circuit 12 to electrically connect the positive direct current bus BUS+ to the first alternating current end o11 of the power conversion apparatus 1, so that the power grid charges the positive bus capacitor C1; and when the voltage amplitude of the first alternating current end o11 of the power conversion apparatus 1 is less than the voltage amplitude of the second alternating current end o12 of the power conversion apparatus 1, control the precharge circuit 12 to electrically connect the negative direct current bus BUS- to the first alternating current end o11 of the power conversion apparatus 1, so that the power grid charges the negative bus capacitor C2.

In this implementation, the power conversion apparatus 1 electrically connects the bus midpoint to the second alternating current end o12 of the power conversion apparatus 1 when the bus voltage is less than twice the voltage amplitude of the power grid, controls the first grid-connected switch K12 to be turned on, and controls the precharge circuit 12 to electrically connects the positive direct current bus BUS+ or the negative direct current bus BUS- to the first alternating current end o11 of the power conversion apparatus 1, so that the power grid charges the positive bus capacitor C1 or the negative bus capacitor C2. In this way, the bus voltage can be raised to a voltage at least higher than the voltage amplitude of the power grid, and can be raised to a voltage twice the voltage amplitude of the power grid at most, so that the grid-connected switches in the power conversion apparatus 1 meet a turn-on condition at a small voltage difference, to avoid a sticking risk. In addition, when the first alternating current end o11 of the power conversion apparatus 1 is electrically connected to the positive direct current bus BUS+ or the negative direct current bus BUS-, the existing first grid-connected switch K12 in the power conversion apparatus 1 is used. Usually, an electrical gap between relay contacts of the grid-connected switch is large. Therefore, when a safety requirement of a same electrical gap needs to be met, compared with an implementation in which the right side of the first precharge switch K4 is connected to the first grid-connected switch K12 and the first alternating current end o11 of the power conversion apparatus 1, a switch with a smaller electrical gap may be selected as the first precharge switch K4 in this implementation. This helps reduce a volume of the first precharge switch K4, and further helps reduce a volume of the power conversion apparatus 1. In addition, a connection relationship of the precharge circuit 12 is diverse. Therefore, the structure of the power conversion apparatus 1 is diverse and highly flexible.

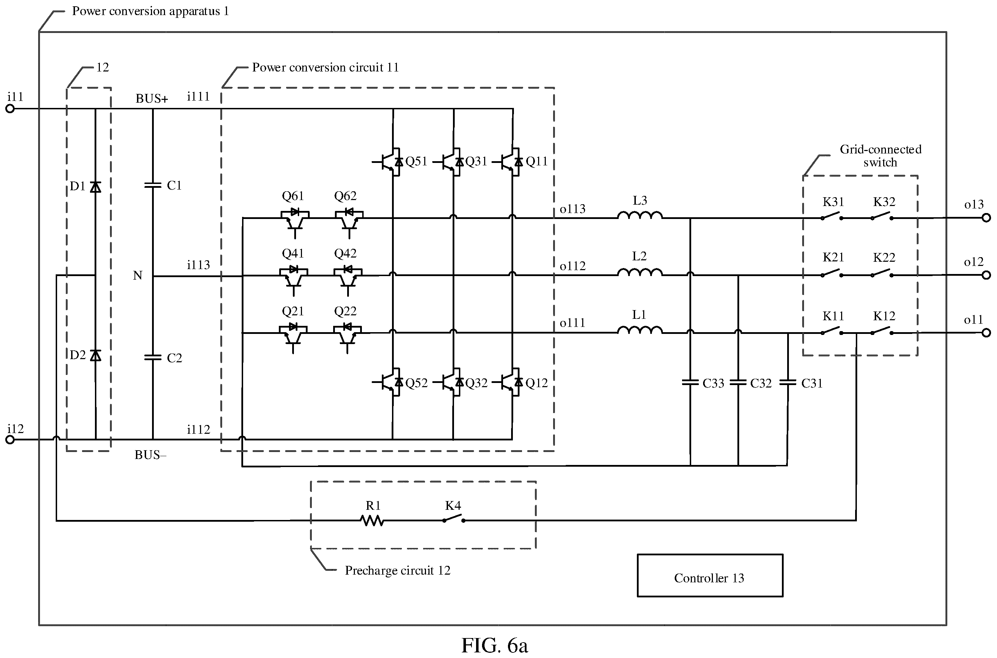

For example, FIG. 6a is a diagram of another structure of a power conversion apparatus according to this application. As shown in FIG. 6a, compared with the power conversion apparatus 1 shown in FIG. 4a, the position of the precharge circuit 12 shown in FIG. 6a is different from the position of the precharge circuit 12 shown in FIG. 4a. Specifically, as shown in FIG. 6a, the midpoint of the precharge bridge arm is first connected to the precharge resistor R and the first precharge switch K4 that are connected in series, and then is connected to the first alternating current end o11 of the power conversion apparatus 1 through the first grid-connected switch K12.

Herein, compared with the embodiment shown in FIG. 4a, only a step of "when a bus voltage is less than twice a voltage amplitude of the power grid, controlling the first grid-connected switch K12 to be turned on until the bus voltage is equal to twice the voltage amplitude of the power grid" is added to a specific implementation of connecting the power conversion apparatus 1 to a grid in this embodiment. For descriptions of other specific implementations, refer to the embodiment shown in FIG. 4a.

In this embodiment of this application, when the bus voltage is less than twice the voltage amplitude of the power grid, the power conversion apparatus 1 controls the second grid-connected switches and the power conversion circuit 11 to electrically connect the bus midpoint to the second alternating current end o12 of the power conversion apparatus 1, controls the first grid-connected switch K12 to be turned on, and controls the precharge circuit 12 to electrically connect the positive direct current bus BUS+ or the negative direct current bus BUS- to the first alternating current end o11 of the power conversion apparatus 1, so that the power grid charges the positive bus capacitor C1 or the negative bus capacitor C2. In this way, the bus voltage can be raised to a voltage at least higher than the voltage amplitude of the power grid, and can be raised to a voltage twice the voltage amplitude of the power grid at most, so that the grid-connected switches in the power conversion apparatus 1 meet a turn-on condition at a small voltage difference, to avoid a sticking risk. In addition, a connection relationship of the precharge circuit 12 is diverse. Therefore, the structure of the power conversion apparatus 1 is diverse and highly flexible.

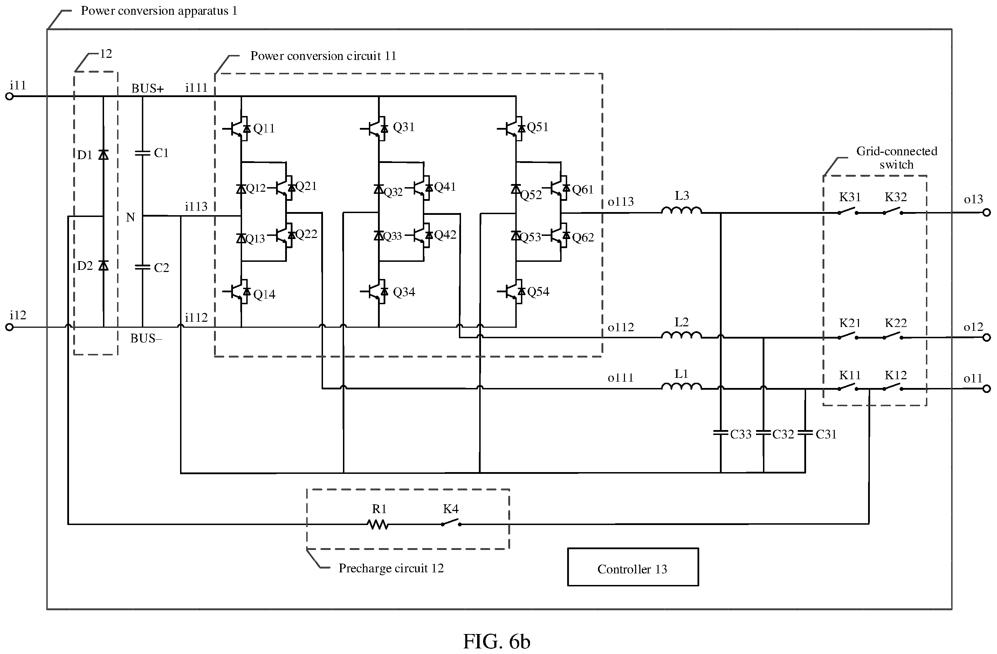

For example, FIG. 6b is a diagram of another structure of a power conversion apparatus according to this application. As shown in FIG. 6b, compared with the power conversion apparatus 1 shown in FIG. 4b, the position of the precharge circuit 12 shown in FIG. 6b is different from the position of the precharge circuit 12 shown in FIG. 4b. Specifically, as shown in FIG. 6b, the midpoint of the precharge bridge arm is first connected to the precharge resistor R and the first precharge switch K4 that are connected in series, and then is connected to the first alternating current end o11 of the power conversion apparatus 1 through the first grid-connected switch K12.

Herein, compared with the embodiment shown in FIG. 4b, only a step of "when a bus voltage is less than twice a voltage amplitude of the power grid, controlling the first grid-connected switch K12 to be turned on until the bus voltage is equal to twice the voltage amplitude of the power grid" is added to a specific implementation of connecting the power conversion apparatus 1 to a grid in this embodiment. For descriptions of other specific implementations, refer to the embodiment shown in FIG. 4b.

In this embodiment of this application, when the bus voltage is less than twice the voltage amplitude of the power grid, the power conversion apparatus 1 controls the second grid-connected switches and the power conversion circuit 11 to electrically connect the bus midpoint to the second alternating current end o12 of the power conversion apparatus 1, controls the first grid-connected switch K12 to be turned on, and controls the precharge circuit 12 to electrically connect the positive direct current bus BUS+ or the negative direct current bus BUS- to the first alternating current end o11 of the power conversion apparatus 1, so that the power grid charges the positive bus capacitor C1 or the negative bus capacitor C2. In this way, the bus voltage can be raised to a voltage at least higher than the voltage amplitude of the power grid, and can be raised to a voltage twice the voltage amplitude of the power grid at most, so that the grid-connected switches in the power conversion apparatus 1 meet a turn-on condition at a small voltage difference, to avoid a sticking risk. In addition, a connection relationship of the precharge circuit 12 is diverse. Therefore, the structure of the power conversion apparatus 1 is diverse and highly flexible.

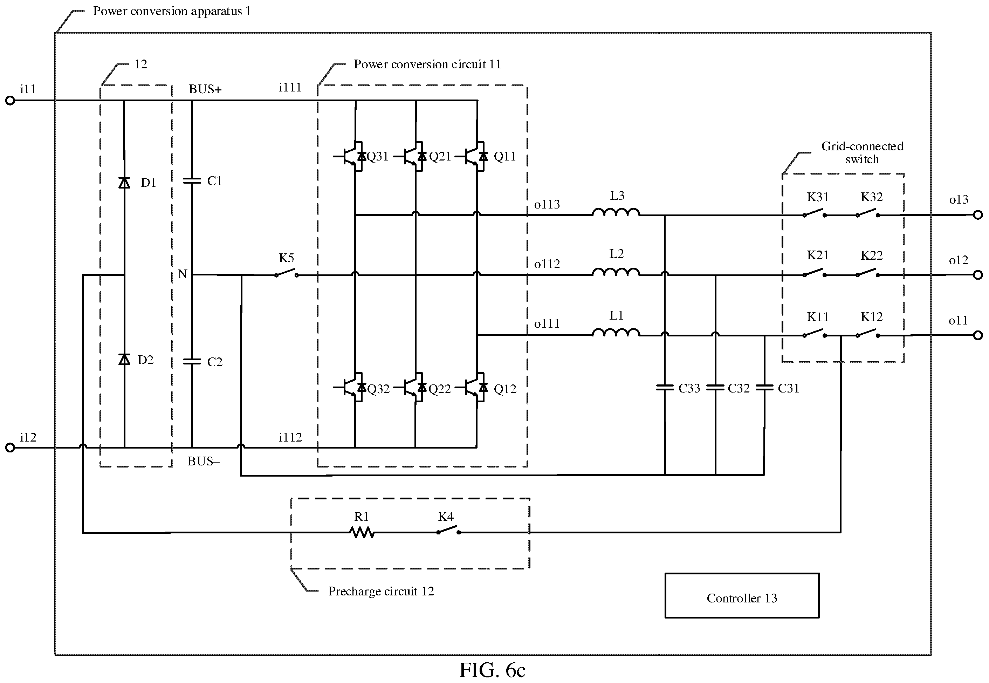

For example, FIG. 6c is a diagram of another structure of a power conversion apparatus according to this application. As shown in FIG. 6c, compared with the power conversion apparatus 1 shown in FIG. 4c, the position of the precharge circuit 12 shown in FIG. 6c is different from the position of the precharge circuit 12 shown in FIG. 4c. Specifically, as shown in FIG. 6c, the midpoint of the precharge bridge arm is first connected to the precharge resistor R and the first precharge switch K4 that are connected in series, and then is connected to the first alternating current end o11 of the power conversion apparatus 1 through the first grid-connected switch K12.

Herein, compared with the embodiment shown in FIG. 4c, only a step of "when a bus voltage is less than twice a voltage amplitude of the power grid, controlling the first grid-connected switch K12 to be turned on until the bus voltage is equal to twice the voltage amplitude of the power grid" is added to a specific implementation of connecting the power conversion apparatus 1 to a grid in this embodiment. For descriptions of other specific implementations, refer to the embodiment shown in FIG. 4c.

In this embodiment of this application, when the bus voltage is less than twice the voltage amplitude of the power grid, the power conversion apparatus 1 controls the second grid-connected switches, the second precharge switch, and the first grid-connected switch K12 to be all turned on, and controls the precharge circuit 12 to electrically connect the positive direct current bus BUS+ or the negative direct current bus BUS- to the first alternating current end o11 of the power conversion apparatus 1, so that the power grid charges the positive bus capacitor C1 or the negative bus capacitor C2. In this way, the bus voltage can be raised to a voltage at least higher than the voltage amplitude of the power grid, and can be raised to a voltage twice the voltage amplitude of the power grid at most, so that the grid-connected switches in the power conversion apparatus 1 meet a turn-on condition at a small voltage difference, to avoid a sticking risk. In addition, a connection relationship of the precharge circuit 12 is diverse. Therefore, the structure of the power conversion apparatus 1 is diverse and highly flexible.

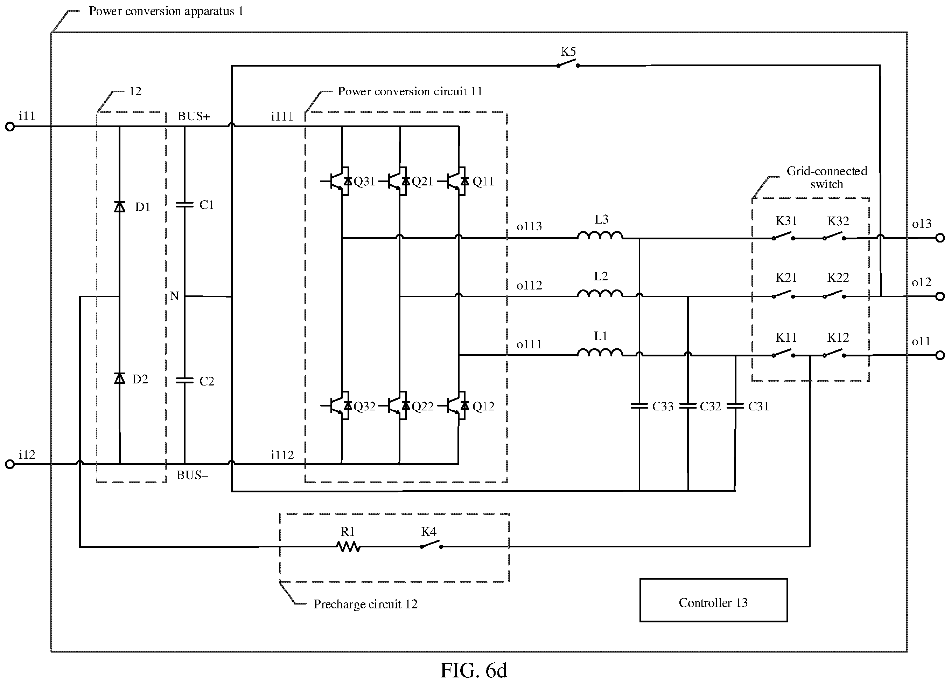

For example, FIG. 6d is a diagram of another structure of a power conversion apparatus according to this application. As shown in FIG. 6d, compared with the power conversion apparatus 1 shown in FIG. 4d, the position of the precharge circuit 12 shown in FIG. 6d is different from the position of the precharge circuit 12 shown in FIG. 4d. Specifically, as shown in FIG. 6d, the midpoint of the precharge bridge arm is first connected to the precharge resistor R and the first precharge switch K4 that are connected in series, and then is connected to the first alternating current end o11 of the power conversion apparatus 1 through the first grid-connected switch K12.

Herein, compared with the embodiment shown in FIG. 4d, only a step of "when a bus voltage is less than twice a voltage amplitude of the power grid, controlling the first grid-connected switch K12 to be turned on until the bus voltage is equal to twice the voltage amplitude of the power grid" is added to a specific implementation of connecting the power conversion apparatus 1 to a grid in this embodiment. For descriptions of other specific implementations, refer to the embodiment shown in FIG. 4d.

In this embodiment of this application, when the bus voltage is less than twice the voltage amplitude of the power grid, the power conversion apparatus 1 controls the second precharge switch K5 to be turned on, controls the first grid-connected switch K12 to be turned on, and controls the precharge circuit 12 to electrically connect the positive direct current bus BUS+ or the negative direct current bus BUS- to the first alternating current end o11 of the power conversion apparatus 1, so that the power grid charges the positive bus capacitor C1 or the negative bus capacitor C2. In this way, the bus voltage can be raised to a voltage at least higher than the voltage amplitude of the power grid, and can be raised to a voltage twice the voltage amplitude of the power grid at most, so that the grid-connected switches in the power conversion apparatus 1 meet a turn-on condition at a small voltage difference, to avoid a sticking risk. In addition, a connection relationship of the precharge circuit 12 is diverse. Therefore, the structure of the power conversion apparatus 1 is diverse and highly flexible.

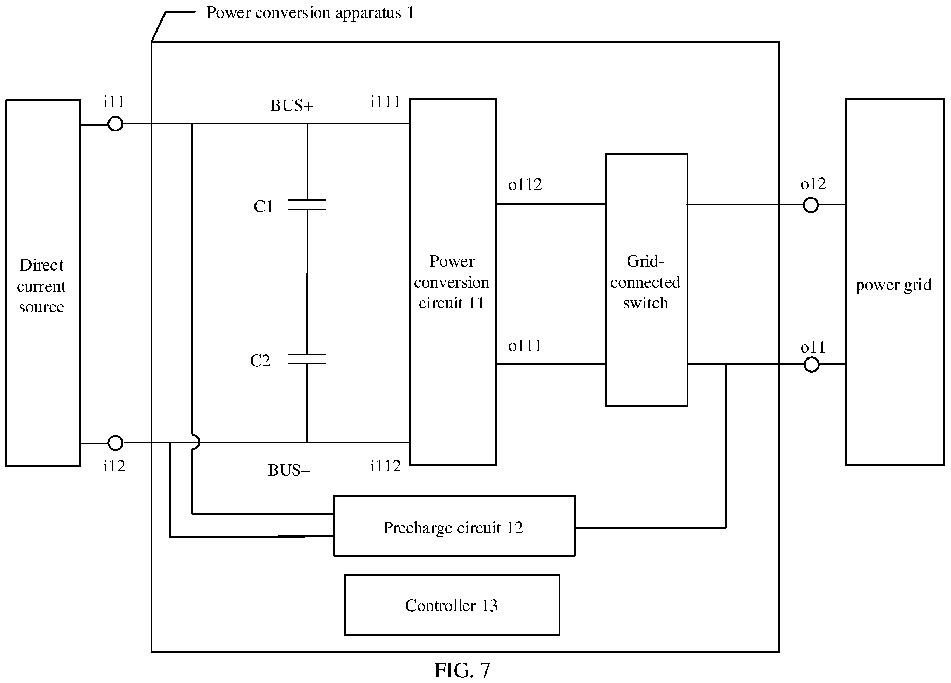

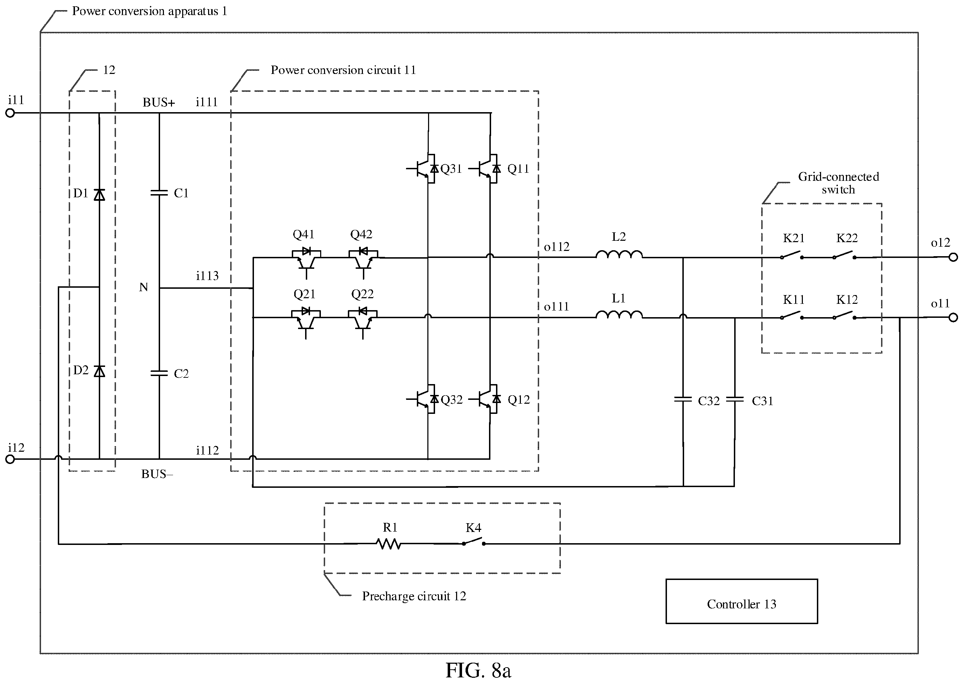

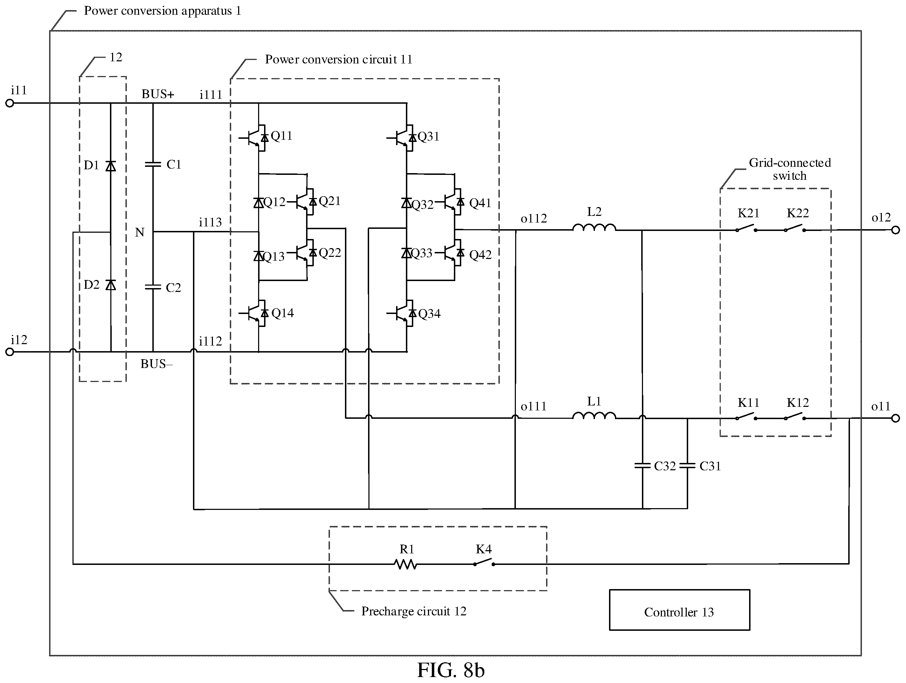

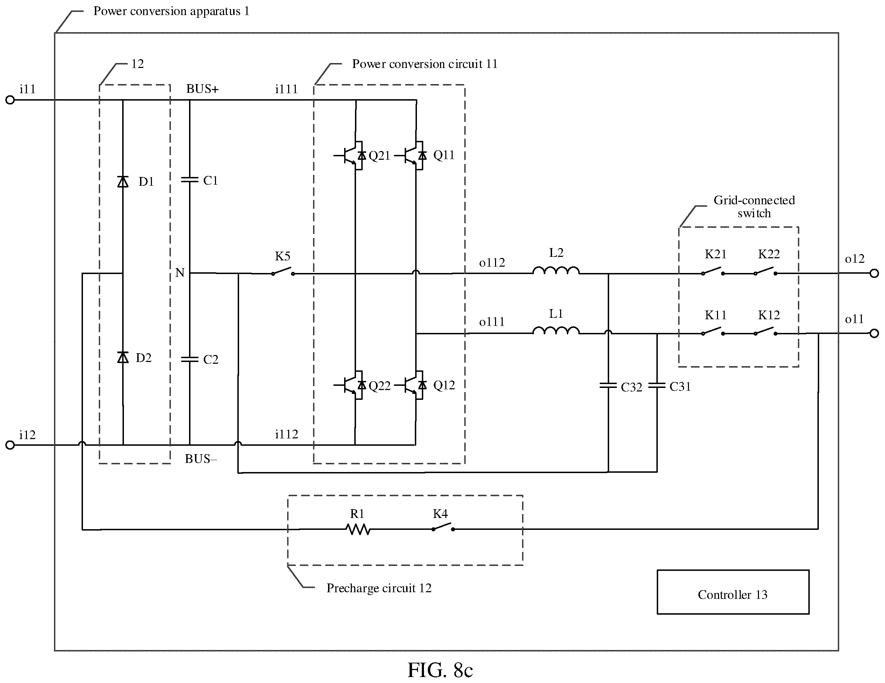

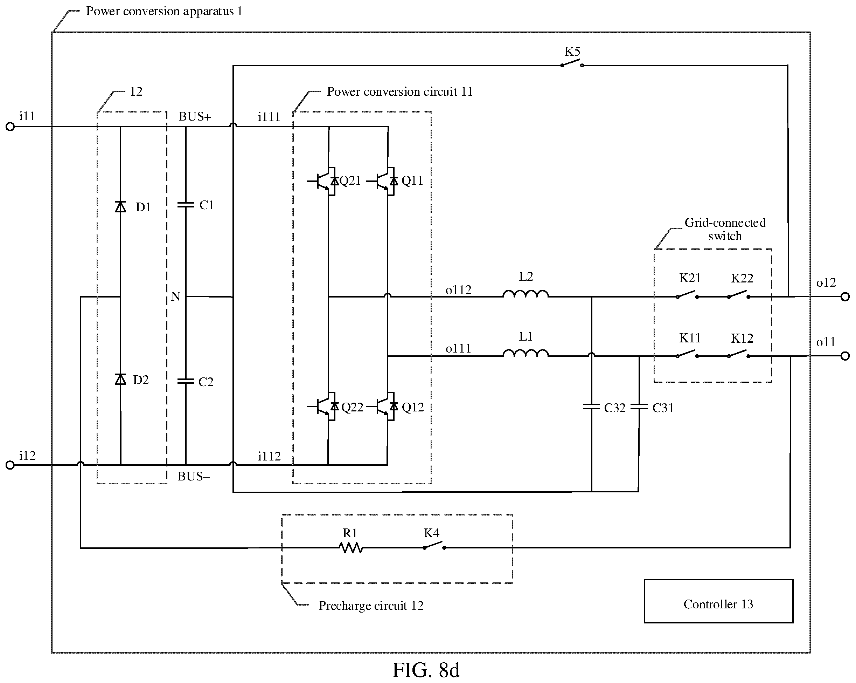

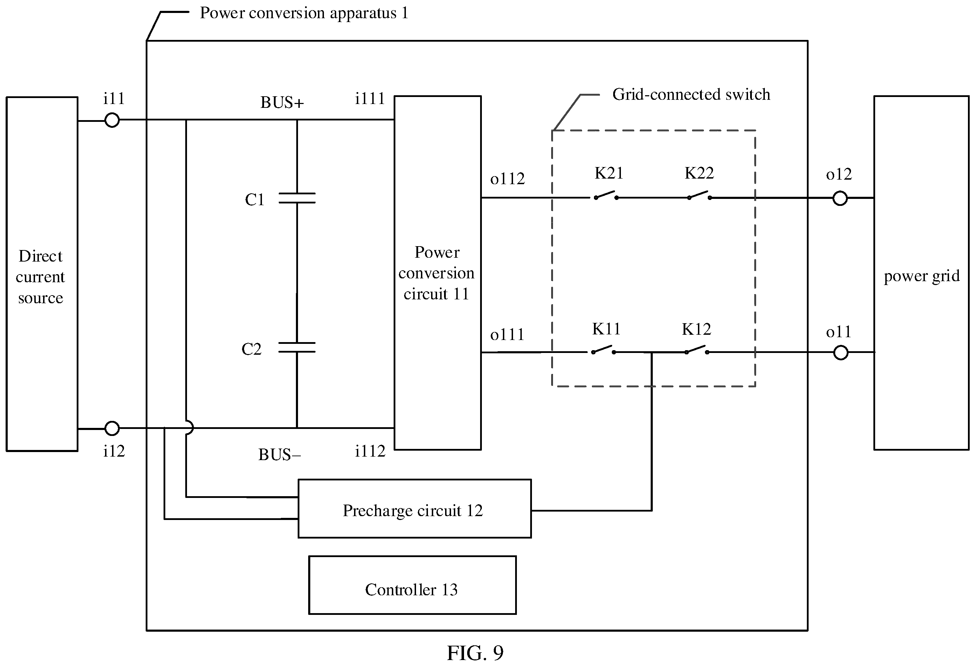

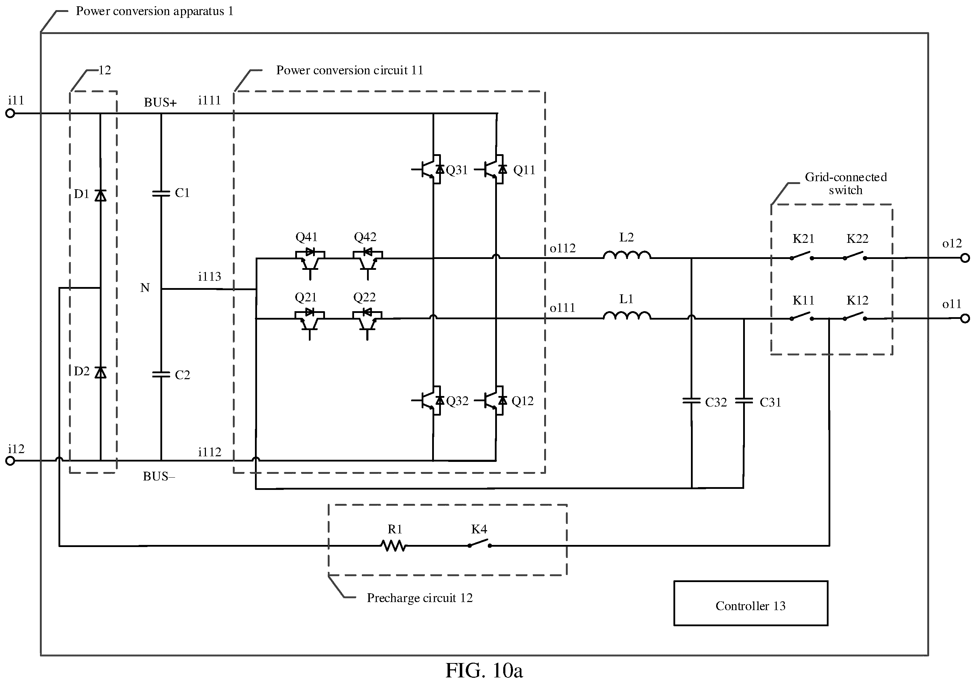

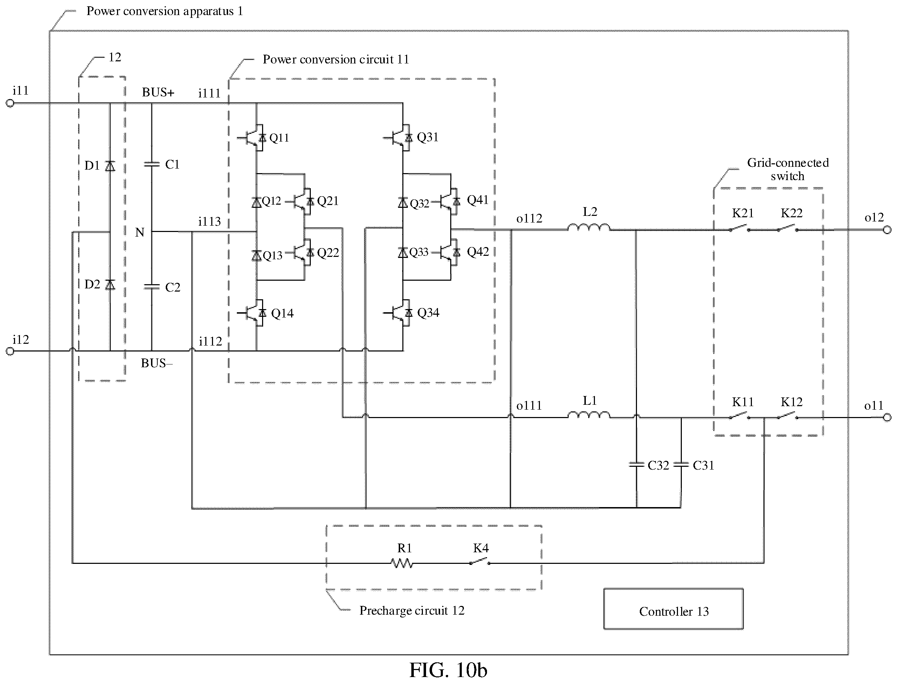

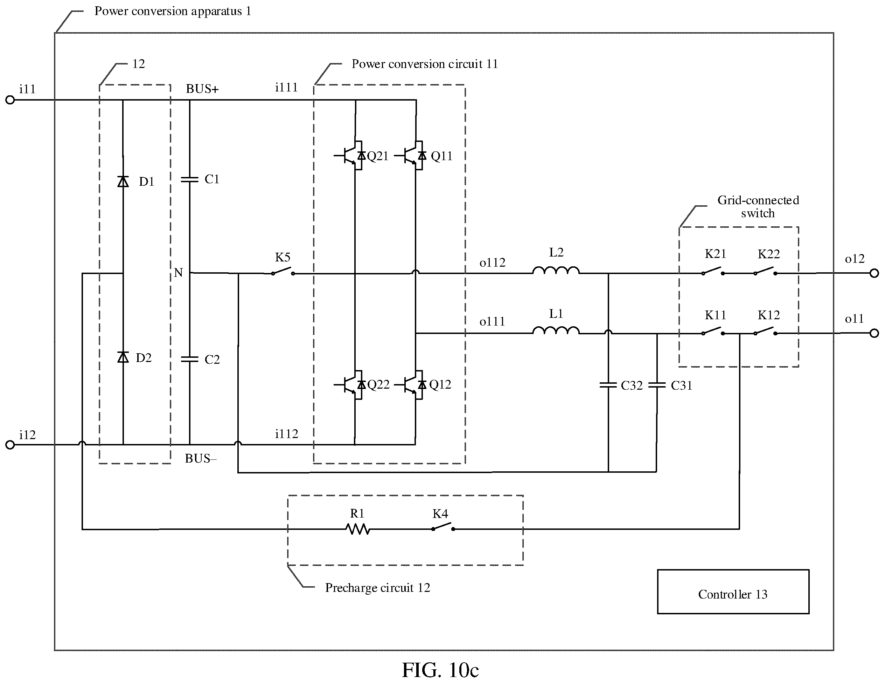

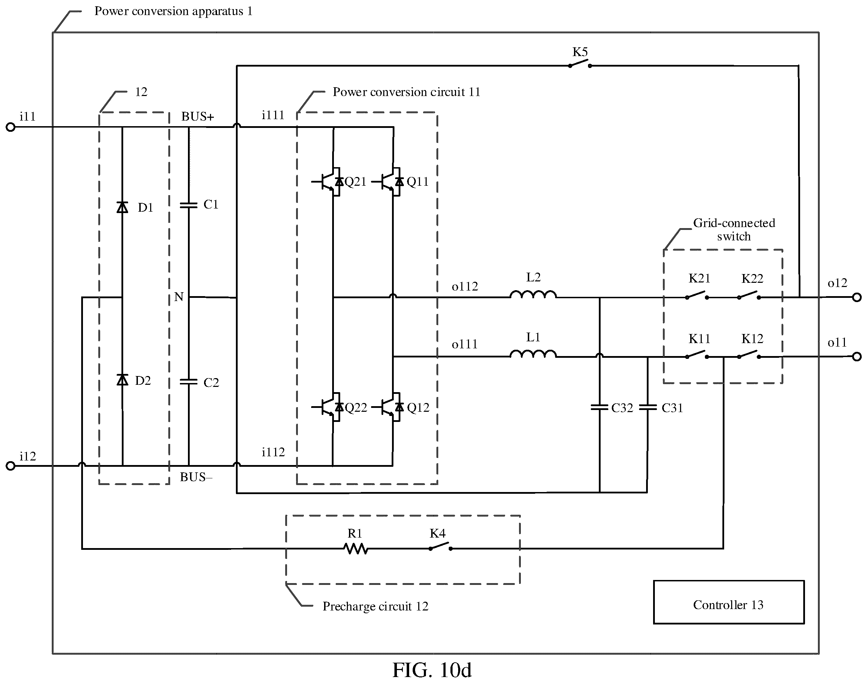

In addition, the control manner of connecting the three-phase power conversion apparatus 1 shown in FIG. 3 to FIG. 4d to a grid is also applicable to the single-phase power conversion apparatus 1 shown in FIG. 7, FIG. 8a, FIG. 8b, FIG. 8c, and FIG. 8d. The control manner of connecting the three-phase power conversion apparatus 1 shown in FIG. 5 to FIG. 6d to a grid is also applicable to the single-phase power conversion apparatus 1 shown in FIG. 9, FIG. 10a, FIG. 10b, FIG. 10c, and FIG. 10d. It should be noted that when the power conversion apparatus 1 is a three-phase power conversion apparatus, the first alternating current end and the second alternating current end of the power conversion apparatus 1 may be any two live wire ends of the power conversion apparatus 1, or one alternating current end is a live wire end of the power conversion apparatus 1, and the other alternating current end is a zero wire end of the power conversion apparatus 1. When the power conversion apparatus 1 is a single-phase power conversion apparatus, one of the first alternating current end and the second alternating current end of the power conversion apparatus 1 is a live wire end of the power conversion apparatus 1, and the other alternating current end is a zero wire end of the power conversion apparatus 1. Further, the three-phase power conversion apparatus 1 shown in FIG. 3 to FIG. 6d is described by using an example in which when the bus voltage is less than twice the voltage amplitude of the power grid, a charging loop of the positive bus capacitor or the negative bus capacitor is controlled to be conducted until the bus voltage is equal to twice the voltage amplitude of the power grid. Actually, when the bus voltage is less than or equal to the voltage amplitude of the power grid, the three-phase power conversion apparatus 1 shown in FIG. 3 to FIG. 6d may also control a charging loop of the positive bus capacitor or the negative bus capacitor to be conducted until the bus voltage is greater than the voltage amplitude of the power grid.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power conversion apparatus with a grid-connected switch turn-on function at a small voltage difference, wherein the power conversion apparatus comprises a direct current end, a positive direct current bus, a negative direct current bus, a positive bus capacitor, a negative bus capacitor, a power conversion circuit, a precharge circuit, a grid-connected switch, a controller, a first alternating current end, and a second alternating current end;
the positive direct current bus and the negative direct current bus are connected to the direct current end, one end of the positive bus capacitor is connected to the positive direct current bus, the other end of the positive bus capacitor is connected to the negative direct current bus through the negative bus capacitor, and a joint between the positive bus capacitor and the negative bus capacitor is a bus midpoint;
a direct current end of the power conversion circuit is separately connected to the positive direct current bus and the negative direct current bus, an alternating current end of the power conversion circuit is connected to the first alternating current end and the second alternating current end through the grid-connected switch, and the first alternating current end and the second alternating current end are configured to connect to a power grid;
the precharge circuit is separately connected to the positive direct current bus, the negative direct current bus, and the first alternating current end of the power conversion apparatus; and
the controller is configured to: when a bus voltage between the positive direct current bus and the negative direct current bus is less than twice a voltage amplitude of the power grid, electrically connect the bus midpoint to the second alternating current end of the power conversion apparatus; when a voltage amplitude of the first alternating current end of the power conversion apparatus is greater than a voltage amplitude of the second alternating current end of the power conversion apparatus, control the precharge circuit to electrically connect the positive direct current bus to the first alternating current end of the power conversion apparatus, so that the power grid charges the positive bus capacitor; and when the voltage amplitude of the first alternating current end of the power conversion apparatus is less than the voltage amplitude of the second alternating current end of the power conversion apparatus, control the precharge circuit to electrically connect the negative direct current bus to the first alternating current end of the power conversion apparatus, so that the power grid charges the negative bus capacitor.

2. The power conversion apparatus according to claim 1, wherein the precharge circuit comprises a precharge bridge arm, a precharge resistor, and a first precharge switch, and the precharge bridge arm comprises an upper bridge arm switch and a lower bridge arm switch;
the upper bridge arm switch and the lower bridge arm switch are connected in series between the positive direct current bus and the negative direct current bus, and the precharge resistor and the first precharge switch are connected in series between a midpoint of the precharge bridge arm and the first alternating current end of the power conversion apparatus;
the controller is configured to: when the bus voltage is less than twice the voltage amplitude of the power grid, control the first precharge switch to be turned on;
the upper bridge arm switch is in an on state when the bus voltage is less than twice the voltage amplitude of the power grid, and when the voltage amplitude of the first alternating current end of the power conversion apparatus is greater than the voltage amplitude of the second alternating current end of the power conversion apparatus; and
the lower bridge arm switch is in an on state when the bus voltage is less than twice the voltage amplitude of the power grid, and when the voltage amplitude of the first alternating current end of the power conversion apparatus is less than the voltage amplitude of the second alternating current end of the power conversion apparatus.

3. The power conversion apparatus according to claim 1 or 2, wherein the alternating current end of the power conversion circuit comprises a first alternating current end, and the grid-connected switch comprises a plurality of first grid-connected switches;
the first alternating current end of the power conversion circuit is connected to the first alternating current end of the power conversion apparatus through the plurality of first grid-connected switches that are connected in series;
the precharge circuit is connected to the first alternating current end of the power conversion apparatus through at least one of the plurality of first grid-connected switches; and
the controller is further configured to: when the bus voltage is less than twice the voltage amplitude of the power grid, control the at least one first grid-connected switch to be all turned on.

4. The power conversion apparatus according to any one of claims 1 to 3, wherein the alternating current end of the power conversion circuit comprises a second alternating current end, and the grid-connected switch comprises a second grid-connected switch;
the second grid-connected switch is connected between the second alternating current end of the power conversion circuit and the second alternating current end of the power conversion apparatus; and
the controller is configured to: when the bus voltage is less than twice the voltage amplitude of the power grid, control the second grid-connected switch to be turned on, and control the power conversion circuit to electrically connect the bus midpoint to the second alternating current end of the power conversion circuit.

5. The power conversion apparatus according to any one of claims 1 to 3, wherein the alternating current end of the power conversion circuit comprises a second alternating current end, the grid-connected switch comprises a second grid-connected switch, and the power conversion apparatus further comprises a second precharge switch;
the second grid-connected switch is connected between the second alternating current end of the power conversion circuit and the second alternating current end of the power conversion apparatus, and the second precharge switch is connected between the bus midpoint and the second alternating current end of the power conversion circuit; and
the controller is configured to: when the bus voltage is less than twice the voltage amplitude of the power grid, control the second grid-connected switch and the second precharge switch to be both turned on.

6. The power conversion apparatus according to any one of claims 1 to 3, wherein the power conversion apparatus further comprises a second precharge switch;
the second precharge switch is connected between the bus midpoint and the second alternating current end of the power conversion apparatus; and
the controller is configured to: when the bus voltage is less than twice the voltage amplitude of the power grid, control the second precharge switch to be turned on.

7. The power conversion apparatus according to any one of claims 4 to 6, wherein the direct current end of the power conversion circuit comprises a first direct current end, a second direct current end, and a third direct current end, the alternating current end of the power conversion circuit comprises the first alternating current end and the second alternating current end, and the power conversion circuit comprises a first bridge arm, a second bridge arm, a third bridge arm, and a fourth bridge arm;
the first direct current end of the power conversion circuit is connected to the positive direct current bus, the second direct current end of the power conversion circuit is connected to the negative direct current bus, and the third direct current end of the power conversion circuit is connected to the bus midpoint;
the first alternating current end of the power conversion circuit is connected to a midpoint of the first bridge arm, and the second alternating current end of the power conversion circuit is connected to a midpoint of the third bridge arm;
the first bridge arm and the third bridge arm are connected in parallel between the first direct current end and the second direct current end of the power conversion circuit; and
the second bridge arm is connected between the third direct current end and the first alternating current end of the power conversion circuit, and the fourth bridge arm is connected between the third direct current end and the second alternating current end of the power conversion circuit.

8. The power conversion apparatus according to any one of claims 4 to 6, wherein the direct current end of the power conversion circuit comprises a first direct current end, a second direct current end, and a third direct current end, the alternating current end of the power conversion circuit comprises the first alternating current end and the second alternating current end, the power conversion circuit comprises a first bridge arm, a second bridge arm, a third bridge arm, and a fourth bridge arm, and each of the first bridge arm and the third bridge arm comprises two upper bridge arm switches and two lower bridge arm switches that are all connected in series;
the first direct current end of the power conversion circuit is connected to the positive direct current bus, the second direct current end of the power conversion circuit is connected to the negative direct current bus, and the third direct current end of the power conversion circuit is connected to the bus midpoint;
the first alternating current end of the power conversion circuit is connected to a midpoint of the second bridge arm, and the second alternating current end of the power conversion circuit is connected to a midpoint of the fourth bridge arm;
the first bridge arm and the third bridge arm are connected in parallel between the first direct current end and the second direct current end of the power conversion circuit, and a midpoint of the first bridge arm and a midpoint of the third bridge arm are both connected to the third direct current end of the power conversion circuit;
the second bridge arm is connected between a joint of the two upper bridge arm switches in the first bridge arm and a joint of the two lower bridge arm switches in the first bridge arm; and
the fourth bridge arm is connected between a joint of the two upper bridge arm switches in the third bridge arm and a joint of the two lower bridge arm switches in the third bridge arm.

9. The power conversion apparatus according to claim 7 or 8, wherein when the power conversion circuit is controlled to electrically connect the bus midpoint to the second alternating current end of the power conversion circuit:
the controller is configured to: when the bus voltage is less than twice the voltage amplitude of the power grid, control the fourth bridge arm to be connected.

10. The power conversion apparatus according to any one of claims 4 to 6, wherein the direct current end of the power conversion circuit comprises a first direct current end and a second direct current end, the alternating current end of the power conversion circuit comprises the first alternating current end and the second alternating current end, and the power conversion circuit comprises a first bridge arm and a second bridge arm;
the first direct current end of the power conversion circuit is connected to the positive direct current bus, and the second direct current end of the power conversion circuit is connected to the negative direct current bus;
the first bridge arm and the second bridge arm are connected in parallel between the first direct current end and the second direct current end of the power conversion circuit; and
a midpoint of the first bridge arm is connected to the first alternating current end of the power conversion circuit, and a midpoint of the second bridge arm is connected to the second alternating current end of the power conversion circuit.

11. The power conversion apparatus according to any one of claims 1 to 10, wherein the controller is further configured to: when the bus voltage is equal to twice the voltage amplitude of the power grid, electrically disconnect the bus midpoint from the second alternating current end of the power conversion apparatus, and control the precharge circuit to electrically disconnect the first alternating current end of the power conversion apparatus separately from the positive direct current bus and the negative direct current bus.

12. The power conversion apparatus according to claim 11, wherein the power conversion apparatus further comprises an inverter capacitor, and the inverter capacitor is connected between the alternating current end of the power conversion circuit and the bus midpoint; and
the controller is further configured to: when the bus midpoint is electrically disconnected from the second alternating current end of the power conversion apparatus, and when the first alternating current end of the power conversion apparatus is electrically disconnected separately from the positive direct current bus and the negative direct current bus, control the power conversion circuit to charge the inverter capacitor based on the bus voltage, to reduce a voltage difference between two ends of the grid-connected switch; and when the voltage difference is less than or equal to a voltage threshold, control the power conversion circuit to stop charging the inverter capacitor based on the bus voltage, and control the grid-connected switch to be turned on.
